# EUROPEAN PATENT APPLICATION

(11) **EP 4 336 823 A1**
(43) Date of publication of application: **13.03.2024**
(21) Application number: 22815027.2
(22) Date of filing: 18.05.2022
(51) Int. Cl.: H04N 7/15

(54) **METHOD FOR SCREEN SHARING, RELATED ELECTRONIC DEVICE, AND SYSTEM**

(30) Priority: 31.05.2021 CN 202110602864
(71) Applicant: Huawei Technologies Co., Ltd., Longgang Shenzhen, Guangdong 518129 (CN)
(72) Inventor: LU, Guili, Shenzhen, Guangdong 518129 (CN)
(74) Representative: Epping - Hermann - Fischer
(86) International application number: PCT/CN2022/093429
(87) International publication number: WO 2022/252980

(57) **Abstract**

This application discloses a screen sharing method, a related electronic device, and a system, to support a first terminal and a second terminal to be in a multi-screen collaboration function, so that the second terminal shares screen interface content with a video call application on the first terminal, and when a third terminal has a video call with the first terminal, the third terminal may view, by using the video call application, the interface content shared by the second terminal. According to the method provided in this application, the second terminal may quickly share the screen interface content with the first terminal and the third terminal. This step is simple, fast, and efficient, to further improve office efficiency.

## Description

This application claims priority to Chinese Patent Application No. 202110602864.0, filed with the China National Intellectual Property Administration on May 31, 2021 and entitled "SCREEN SHARING METHOD, RELATED ELECTRONIC DEVICE, AND SYSTEM", which is incorporated herein by reference in its entirety.

### TECHNICAL FIELD

This application relates to the field of communication technologies, and in particular, to a cross-device collaborative screen sharing method, a related electronic device, and a system.

### BACKGROUND

Current video conferencing software has been able to support a plurality of participants to perform screen sharing. However, a screen sharing function depends on the conferencing software and a terminal joining a conference. In other words, the terminal needs to install the conferencing software, and join the conference based on a conference identity document (identity document, ID). The conferencing software needs to provide a screen sharing function based on a screen recording. Requirements of users who do not install or cannot install the conferencing software on their terminals but still want to join the conference and perform screen sharing are not met.

### SUMMARY

This application provides a screen sharing method, a related electronic device, and a system, to support a first terminal and a second terminal to be in a multi-screen collaboration function, so that the second terminal shares screen interface content with a video call application on the first terminal, and when a third terminal has a video call with the first terminal, the third terminal may view, by using the video call application, the interface content shared by the second terminal. The foregoing objective and another objective are achieved based on features in the independent claims. Further implementations are provided in the dependent claims, the specification, and the accompanying drawings.

According to a first aspect, an embodiment of this application provides a screen sharing method. The method may include: A first terminal establishes a first connection to a second terminal. The first terminal obtains a first media stream of the second terminal. The first media stream includes data of audio and a video generated by the second terminal, the audio includes a sound collected by a microphone of the second terminal or audio corresponding to a media file played by the second terminal, and the video includes a screen picture recorded by the second terminal. The first terminal generates a second media stream based on the first media stream. The second media stream includes the screen picture recorded by the second terminal. The first terminal sends the second media stream to a third terminal through a second connection. The third terminal plays the second media stream received from the first terminal. The first terminal plays a third media stream received from the third terminal. The third media stream includes a picture captured by a camera of the third terminal or a sound collected by a microphone of the third terminal.

According to the method in the first aspect, the second terminal may quickly share screen interface content with the first terminal and the third terminal. This step is simple, fast, and efficient, to further improve office efficiency. For example, the first terminal and the second terminal may be supported to be in a multi-screen collaboration function, so that the second terminal shares the screen interface content with a video call application on the first terminal, and when the third terminal has a video call with the first terminal, the third terminal may view, by using the video call application, the interface content shared by the second terminal.

Display content of a media stream (including an audio stream and a video stream) sent by the first terminal to the third terminal includes but is not limited to the following three cases:
1. The display content is edited by the first terminal.

After the first terminal receives a video stream captured by the second terminal, a user may perform some control operations on a first terminal side, to edit, set, or adjust the video stream, generate a new video stream, and send the new video stream to the third terminal. For example, the user may make some comments in a video picture of the first terminal. The comments and the original video picture are combined into a new video picture and sent to the third terminal. For another example, the user may set that a video picture sent by the first terminal to the third terminal not only includes a screen recording picture of the second terminal, but also includes a portrait that is of the user and that is captured by a camera of the first terminal. In this way, a third terminal side not only displays the screen recording picture from the second terminal, but also displays the portrait of the user of the first terminal. Therefore, the user has better video call experience. In addition, a picture parameter may be further adjusted in a video call screen of the first terminal. The picture parameter may include one or more of the following: an image cropping size, a color temperature of an image, a beauty/bodybuilding type, a filter type, a sticker option, and the like.

Therefore, the first terminal may adjust, based on an editing capability of the first terminal, an image captured by the second terminal, to generate a new display picture and send the new display picture to the third terminal. This brings use convenience to the user of the first terminal.

2. The display content is edited by the second terminal.

After the second terminal generates a screen recording picture, a user may perform some control operations on a second terminal side, to edit, set, or adjust the video stream, generate a new video stream, and send the new video stream to the first terminal.

For example, the user may make some comments on the screen recording picture of the second terminal. The comments and the original screen recording picture are combined into a new video picture and sent to the first terminal. The first terminal sends the new video picture to the third terminal. For another example, the user may set that a video picture sent by the second terminal to the first terminal not only includes a screen recording picture of the second terminal, but also includes a portrait that is of the user and that is captured by a camera of the second terminal. In this way, a first terminal side and a third terminal side not only display the screen recording picture from the second terminal, but also display the portrait of the user of the second terminal. Therefore, the user has better video call experience. In addition, a picture parameter may be further adjusted in a user interface of the second terminal. The picture parameter may include one or more of the following: an image cropping size, a color temperature of an image, a beauty/bodybuilding type, a filter type, a sticker option, and the like.

Therefore, the second terminal may adjust, based on an editing capability of the second terminal, an image captured by the second terminal, to generate a new display picture and send the new display picture to the first terminal. This brings use convenience to the user of the second terminal.

3. The display content is collaboratively edited by the first terminal and the second terminal. With reference to the descriptions of the foregoing two aspects, in an implementation, the first terminal and the second terminal each may have a video picture editing function. In this way, the first terminal and the second terminal may collaboratively complete editing of the video picture, to be close to display effect that the user wants to achieve as much as possible. This brings convenience to users of both the first terminal and the second terminal, and avoids a case in which editing display effect cannot satisfy both users when the first terminal or the second terminal separately edits a display picture.

For example, after the second terminal edits a screen recording picture, the first terminal may edit the edited picture again. After the first terminal or the second terminal edits a screen recording picture, a display picture is synchronized to display interfaces of the first terminal and the second terminal.

Further, after the first terminal sends a display effect adjustment instruction to the second terminal, the second terminal may further perform compatibility processing on the instruction, so that the second terminal can effectively complete adjustment of corresponding display effect in response to the processed instruction. Because the first terminal and the second terminal may have different device types and device models, in response to a user operation that the user adjusts the display effect, the first terminal may generate some instructions that are not supported or cannot be identified by the second terminal, and the second terminal may not directly adjust the interface display effect in response to these instructions. The second terminal performs compatibility processing on the instruction, so that the second terminal can respond to an operation performed by the user on the first terminal, and the first terminal can control the second terminal to adjust the interface display effect.

It may be learned from the foregoing situation that, in addition to a case in which the second terminal may have a capability of editing a screen recording picture or another video stream, for a screen recording picture or another video stream from the second terminal, the first terminal may have a capability of editing the screen recording picture or the another video stream. This enhances effect of controlling the display interface of the second terminal by the first terminal, and improves use experience of the user.

In this embodiment of this application, that the first terminal displays an image of the second terminal may be that the first terminal transmits an image from the second terminal through a data stream channel collected by the camera of the first terminal. In other words, the first terminal originally transmits, through the data stream channel, data of an image captured by the camera of the first terminal. However, in a scenario of this embodiment of this application, the data stream channel is used to transmit a screen recording data stream or another video stream from the second terminal. Therefore, an upper-layer application of the first terminal does not need to perceive whether a displayed image comes from the first terminal or the second terminal. The video stream captured by the second terminal is equivalent to a video stream captured by a remote camera of the first terminal. The first terminal can send the obtained image of the second terminal to the upper-layer application, without a need to modify a manner in which a third-party application invokes a system interface, in other words, without requiring a third-party application to adapt, to expand a use scenario of screen sharing between the first terminal and the second terminal. With reference to the first aspect, in an implementation, before the first terminal sends the second media stream to a third terminal through a second connection, the first terminal establishes the second connection to the third terminal.

With reference to the first aspect, in an implementation, before the first terminal establishes the first connection to the second terminal, the first terminal establishes the second connection to the third terminal. The first terminal plays the third media stream received from the third terminal. The third media stream includes the picture captured by the camera of the third terminal or the sound collected by the microphone of the third terminal. The third terminal plays a fourth media stream received from the first terminal. The fourth media stream includes a picture captured by a camera of the first terminal or a sound collected by a microphone of the first terminal.

With reference to the first aspect, in an implementation, before the first terminal obtains the first media stream of the second terminal, the first terminal detects a first user operation. The first user operation indicates the second terminal to start recording the screen picture.

With reference to the first aspect, in an implementation, the second media stream is the same as the first media stream.

With reference to the first aspect, in an implementation, the second media stream further includes the picture captured by the camera of the first terminal.

With reference to the first aspect, in an implementation, the second media stream further includes an editing trace of the first terminal in the screen picture recorded by the second terminal.

With reference to the first aspect, in an implementation, the second media stream further includes the sound collected by the microphone of the first terminal.

With reference to the first aspect, in an implementation, the screen picture recorded by the second terminal includes an entire screen picture recorded by the second terminal, a screen picture that corresponds to a partial area and that is recorded by the second terminal, or a screen picture that corresponds to a specified file and that is recorded by the second terminal.

With reference to the first aspect, in an implementation, the first terminal transmits a video stream included in the second media stream to an image stream channel of an image captured by the camera of the first terminal; the first terminal transmits an audio stream included in the second media stream to an audio stream channel of the sound collected by the microphone of the first terminal; and the first terminal sends a media stream in the image stream channel and the audio stream channel to the third terminal through the second connection.

With reference to the first aspect, in an implementation, after the first terminal establishes the first connection to the second terminal, the first terminal negotiates a first parameter with the second terminal. The first parameter includes one or more of the following: a bitrate of a screen recording or a sound recording, a resolution of the screen recording, a sound source of the sound recording, a cache path, an audio or video encoding/decoding manner, a specified screen recording area, a specified recording file, and a video window rotation policy, and the sound source of the sound recording includes audio corresponding to a played media file of the second terminal or audio collected by the microphone of the second terminal.

With reference to the first aspect, in an implementation, a first user interface of the first terminal includes a first window and a second window, and a second user interface of the third terminal includes a third window and a fourth window.

With reference to the first aspect, in an implementation, after the first terminal sends the second media stream to the third terminal through the second connection, a picture displayed in the first window is the picture captured by the camera of the third terminal, a picture displayed in the second window is the screen picture recorded by the second terminal, a picture displayed in the third window is the screen picture recorded by the second terminal, and a picture displayed in the fourth window is the picture captured by the camera of the third terminal.

With reference to the first aspect, in an implementation, after the first terminal sends the second media stream to the third terminal through the second connection, a picture displayed in the first window is the screen picture recorded by the second terminal, a picture displayed in the second window is the picture captured by the camera of the third terminal, a picture displayed in the third window is the screen picture recorded by the second terminal, and a picture displayed in the fourth window is the picture captured by the camera of the third terminal.

With reference to the first aspect, in an implementation, the first user interface of the first terminal further includes a fifth window, and the second user interface of the third terminal further includes a sixth window. A picture displayed in the fifth window is the picture captured by the camera of the first terminal, and a picture displayed in the sixth window is the picture captured by the camera of the first terminal.

With reference to the first aspect, in an implementation, when the first terminal plays the third media stream received from the third terminal, the picture displayed in the first window is the picture captured by the camera of the third terminal, and the picture displayed in the second window is the picture captured by the camera of the first terminal. When the third terminal plays the fourth media stream received from the first terminal, the picture displayed in the third window is the picture captured by the camera of the first terminal, and the picture displayed in the fourth window is the picture captured by the camera of the third terminal.

According to a second aspect, this application provides a screen sharing method. The method may include: A first terminal establishes a first connection to a second terminal. The first terminal obtains a first media stream of the second terminal. The first media stream includes data of audio and a video generated by the second terminal, the audio includes a sound collected by a microphone of the second terminal or audio corresponding to a media file played by the second terminal, and the video includes a screen picture recorded by the second terminal. The first terminal generates a second media stream based on the first media stream. The second media stream includes the screen picture recorded by the second terminal. The first terminal sends the second media stream to a third terminal through a second connection. The screen picture that is recorded by the second terminal and that is included in the second media stream is displayed on a screen of the third terminal. The first terminal plays a third media stream received from the third terminal. The third media stream includes a picture captured by a camera of the third terminal or a sound collected by a microphone of the third terminal.

According to the method in the second aspect, the second terminal may quickly share screen interface content with the first terminal and the third terminal. This step is simple, fast, and efficient, to further improve office efficiency. For example, the first terminal and the second terminal may be supported to be in a multi-screen collaboration function, so that the second terminal shares the screen interface content with a video call application on the first terminal, and when the third terminal has a video call with the first terminal, the third terminal may view, by using the video call application, the interface content shared by the second terminal.

With reference to the second aspect, in an implementation, before the first terminal sends the second media stream to a third terminal through a second connection, the first terminal establishes the second connection to the third terminal.

With reference to the second aspect, in an implementation, before the first terminal establishes the first connection to the second terminal, the first terminal establishes the second connection to the third terminal. The first terminal sends a fourth media stream to the third terminal through the second connection. The fourth media stream includes a picture captured by a camera of the first terminal or a sound collected by a microphone of the first terminal, and the picture captured by the camera of the first terminal is displayed on the screen of the third terminal. The first terminal receives, through the second connection, the third media stream sent by the third terminal. The first terminal plays the third media stream received from the third terminal. The third media stream includes the picture captured by the camera of the third terminal or the sound collected by the microphone of the third terminal.

With reference to the second aspect, in an implementation, before the first terminal obtains the first media stream of the second terminal, the first terminal detects a first user operation. The first user operation indicates the second terminal to start recording the screen picture.

With reference to the second aspect, in an implementation, the second media stream is the same as the first media stream.

With reference to the second aspect, in an implementation, the second media stream further includes the picture captured by the camera of the first terminal.

With reference to the second aspect, in an implementation, the second media stream further includes an editing trace of the first terminal in the screen picture recorded by the second terminal. With reference to the second aspect, in an implementation, the second media stream further includes the sound collected by the microphone of the first terminal.

With reference to the second aspect, in an implementation, the screen picture recorded by the second terminal includes an entire screen picture recorded by the second terminal, a screen picture that corresponds to a partial area and that is recorded by the second terminal, or a screen picture that corresponds to a specified file and that is recorded by the second terminal.

With reference to the second aspect, in an implementation, the first terminal transmit a video stream included in the second media stream to an image stream channel of an image captured by the camera of the first terminal. The first terminal transmits an audio stream included in the second media stream to an audio stream channel of the sound collected by the microphone of the first terminal. The first terminal sends a media stream in the image stream channel and the audio stream channel to the third terminal through the second connection.

With reference to the second aspect, in an implementation, after the first terminal establishes the first connection to the second terminal, the first terminal negotiates a first parameter with the second terminal. The first parameter includes one or more of the following: a bitrate of a screen recording or a sound recording, a resolution of the screen recording, a sound source of the sound recording, a cache path, an audio or video encoding/decoding manner, a specified screen recording area, a specified recording file, and a video window rotation policy, and the sound source of the sound recording includes audio corresponding to a played media file of the second terminal or audio collected by the microphone of the second terminal.

With reference to the second aspect, in an implementation, a first user interface of the first terminal includes a first window and a second window, and a second user interface of the third terminal includes a third window and a fourth window.

With reference to the second aspect, in an implementation, after the first terminal sends the second media stream to the third terminal through the second connection, a picture displayed in the first window is the picture captured by the camera of the third terminal, a picture displayed in the second window is the screen picture recorded by the second terminal, a picture displayed in the third window is the screen picture recorded by the second terminal, and a picture displayed in the fourth window is the picture captured by the camera of the third terminal.

With reference to the second aspect, in an implementation, after the first terminal sends the second media stream to the third terminal through the second connection, a picture displayed in the first window is the screen picture recorded by the second terminal, a picture displayed in the second window is the picture captured by the camera of the third terminal, a picture displayed in the third window is the screen picture recorded by the second terminal, and a picture displayed in the fourth window is the picture captured by the camera of the third terminal.

With reference to the second aspect, in an implementation, the first user interface of the first terminal further includes a fifth window, and the second user interface of the third terminal further includes a sixth window. A picture displayed in the fifth window is the picture captured by the camera of the first terminal, and a picture displayed in the sixth window is the picture captured by the camera of the first terminal.

With reference to the second aspect, in an implementation, after the first terminal sends the fourth media stream to the third terminal through the second connection, the picture displayed in the third window is the picture captured by the camera of the first terminal, and the picture displayed in the fourth window is the picture captured by the camera of the third terminal. After the first terminal receives, through the second connection, the third media stream sent by the third terminal, the picture displayed in the first window is the picture captured by the camera of the third terminal, and the picture displayed in the second window is the picture captured by the camera of the first terminal.

According to a third aspect, this application provides an electronic device. The electronic device may include a communication apparatus, a display, a memory, a processor coupled to the memory, a plurality of applications, and one or more programs, the display is configured to display a picture, the memory stores computer-executable instructions, and when the processor executes the instructions, the electronic device is enabled to implement any function of the first terminal in the second aspect.

According to a fourth aspect, this application provides a communication system. The communication system includes a first terminal, a second terminal, and a third terminal, and the first terminal may implement any function of the first terminal in the second aspect.

According to a fifth aspect, an embodiment of this application provides a computer storage medium. The storage medium stores a computer program, the computer program includes executable instructions, and when the executable instructions are executed by a processor, the processor is enabled to perform an operation corresponding to the method provided in the second aspect.

According to a sixth aspect, an embodiment of this application provides a computer program product. When the computer program product runs on an electronic device, the electronic device is enabled to perform any one of the possible implementations of the second aspect.

According to a seventh aspect, an embodiment of this application provides a chip system. The chip system may be applied to an electronic device, the chip includes one or more processors, and the processor is configured to invoke computer instructions, so that the electronic device implements any one of the possible implementations of the second aspect.

According to the method provided in this application, the second terminal may quickly share the screen interface content with the first terminal and the third terminal. This step is simple, fast, and efficient, to further improve office efficiency.

### BRIEF DESCRIPTION OF DRAWINGS

FIG. 1 is a schematic diagram of a video conference scenario;
FIG. 2 is a schematic diagram of a communication system according to an embodiment of this application;
FIG. 3 is a schematic diagram of a hardware structure of an electronic device according to an embodiment of this application;
FIG. 4 is a schematic diagram of an interface of a video call service scenario according to an embodiment of this application;
FIG. 5A to FIG. 5C are a schematic diagram of an interface of a video call service scenario according to an embodiment of this application;
FIG. 6A to FIG. 6C are a schematic diagram of an interface of a video call service scenario according to an embodiment of this application;

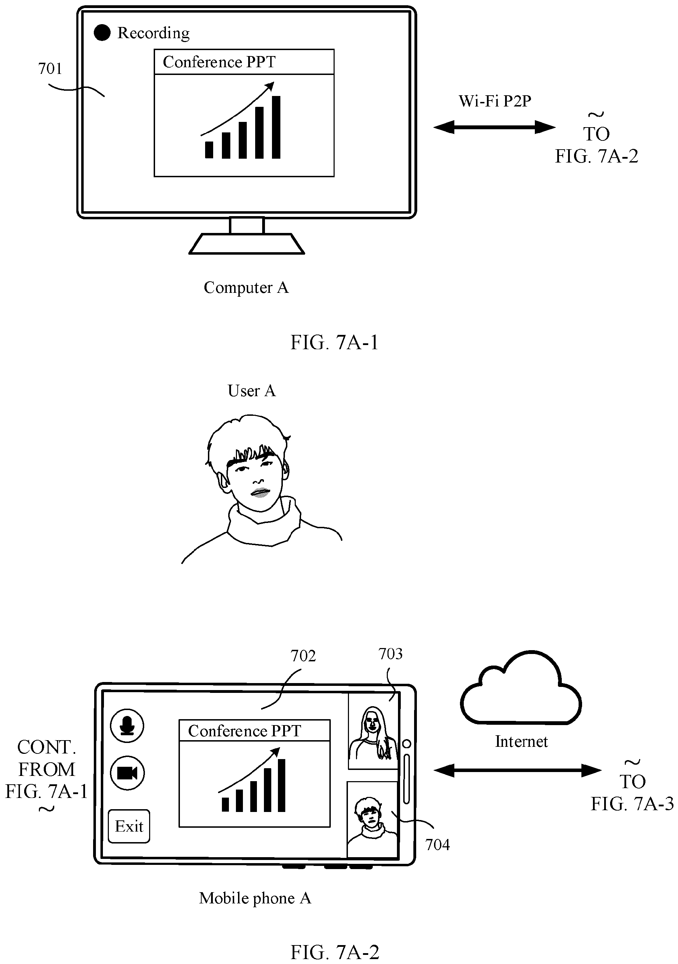

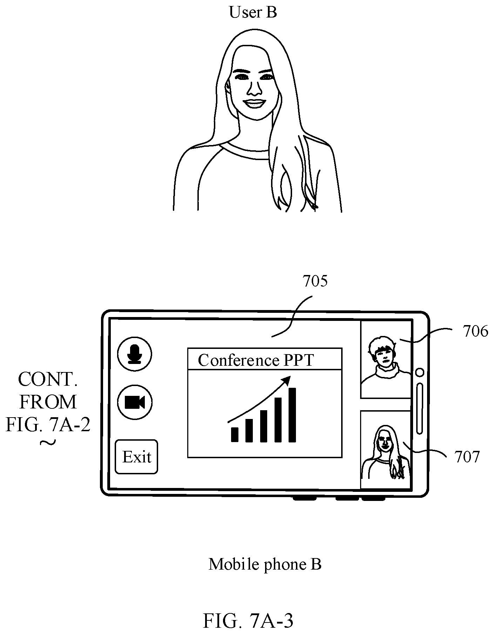

FIG. 7A-1 to FIG. 7A-3 are a schematic diagram of an interface of a video call service scenario according to an embodiment of this application;

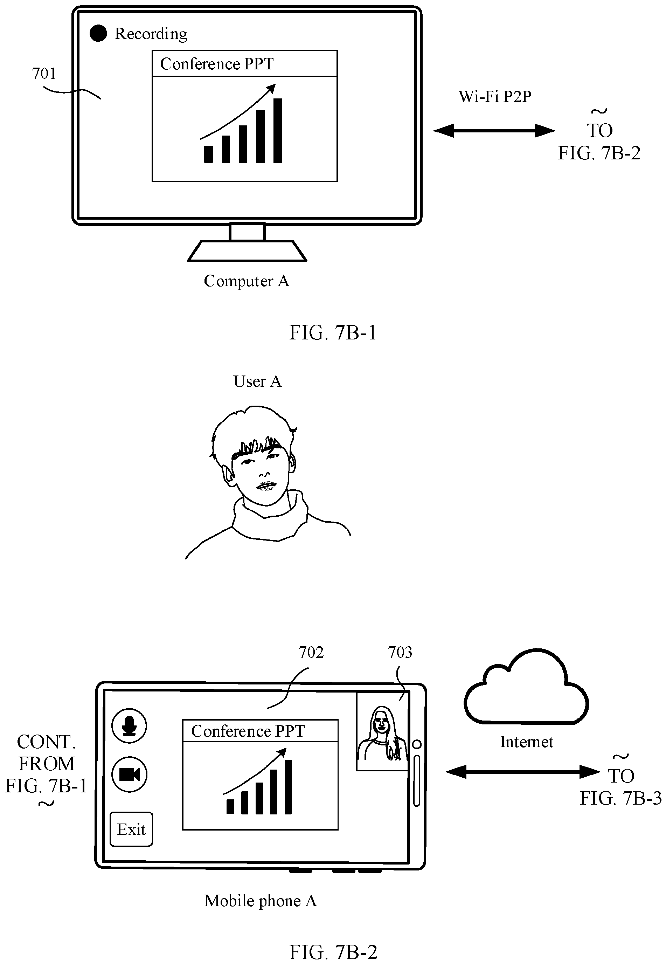

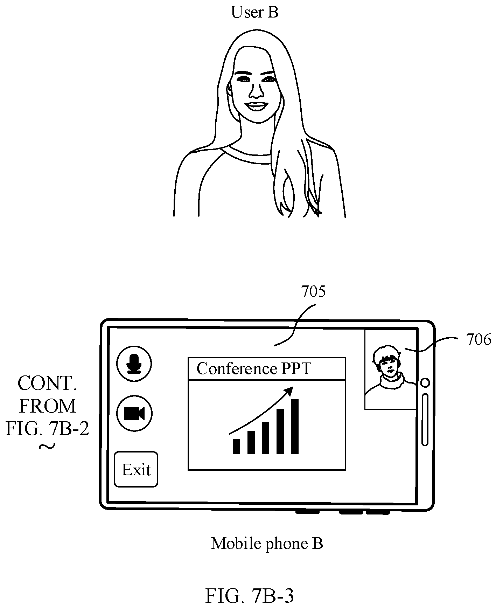

FIG. 7B-1 to FIG. 7B-3 are a schematic diagram of an interface of a video call service scenario according to an embodiment of this application;

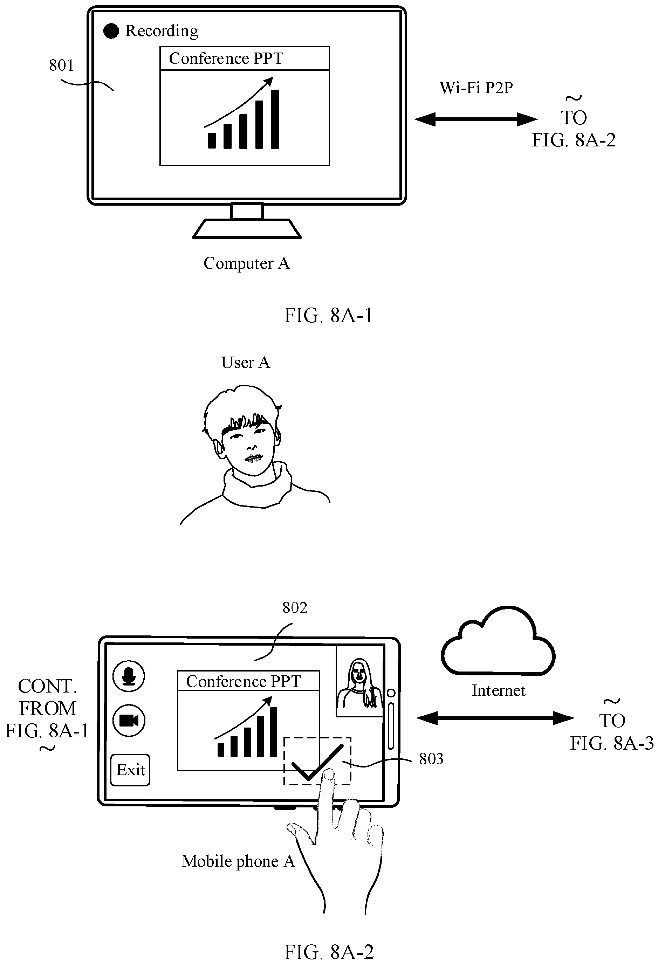

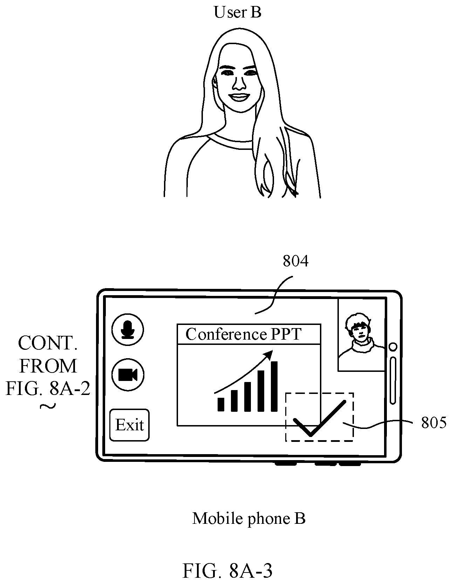

FIG. 8A-1 to FIG. 8A-3 are a schematic diagram of an interface of a video call service scenario according to an embodiment of this application;

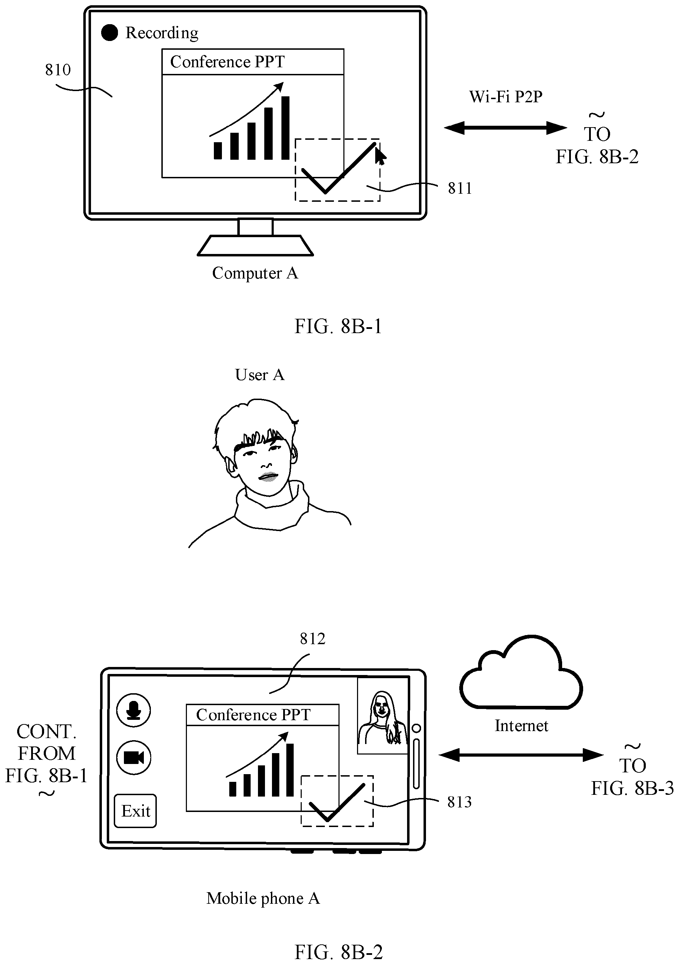

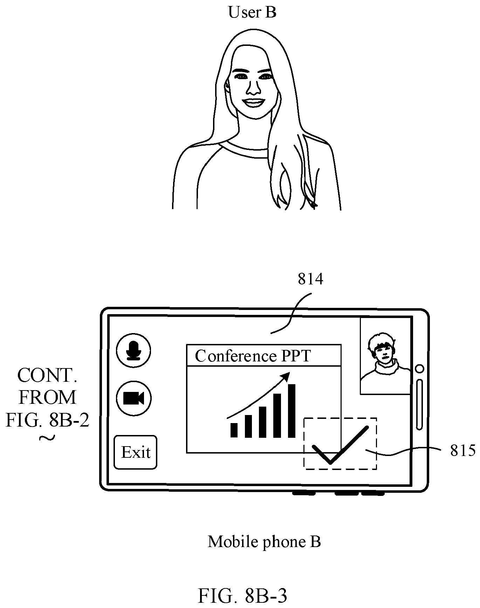

FIG. 8B-1 to FIG. 8B-3 are a schematic diagram of an interface of a video call service scenario according to an embodiment of this application;

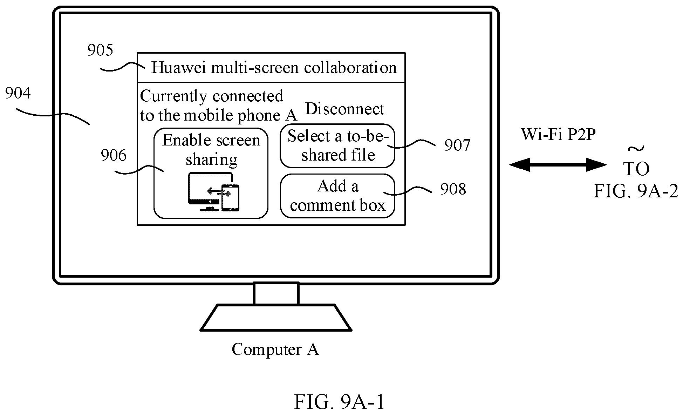

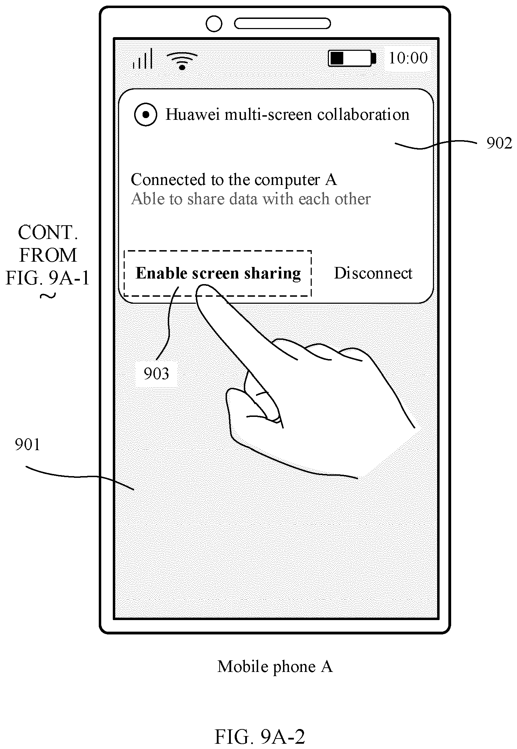

FIG. 9A-1 and FIG. 9A-2 are a schematic diagram of a user interface according to an embodiment of this application;

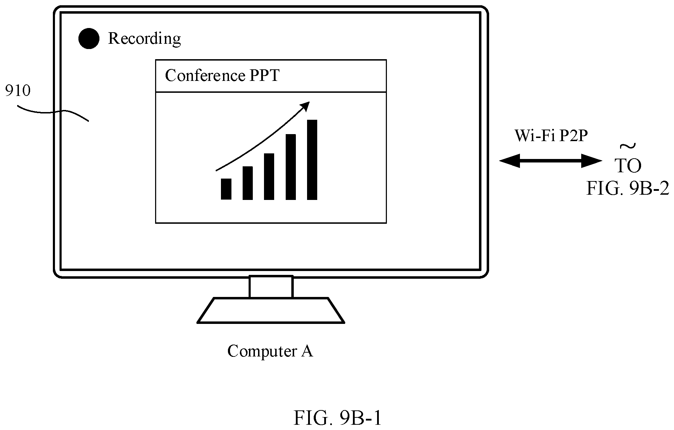

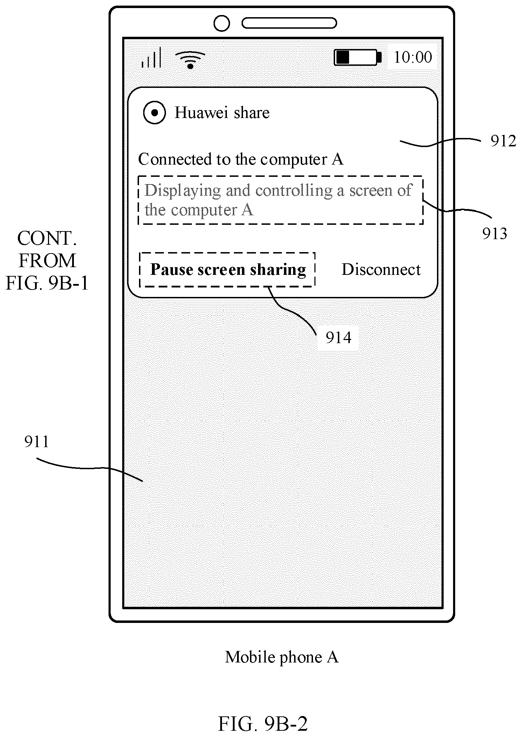

FIG. 9B-1 and FIG. 9B-2 are a schematic diagram of a user interface according to an embodiment of this application;

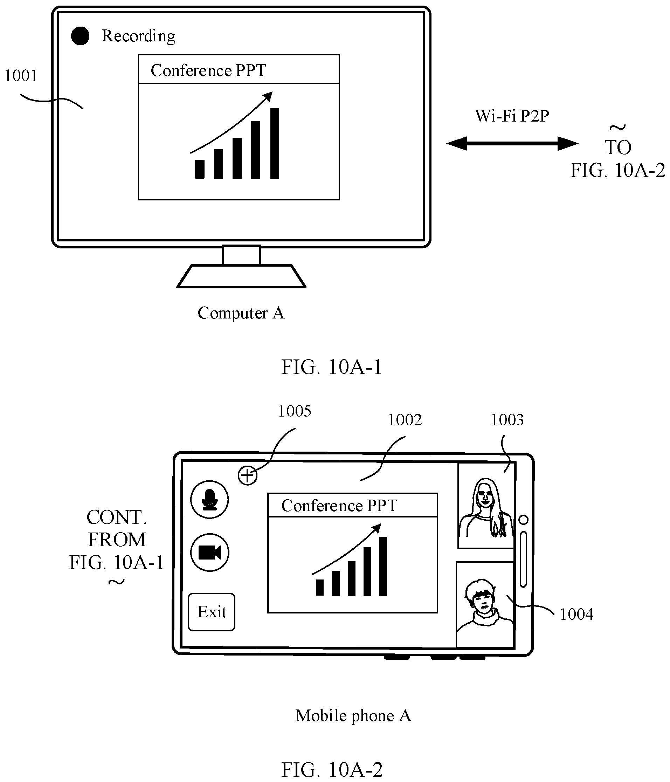

FIG. 10A-1 and FIG. 10A-2 are a schematic diagram of a user interface according to an embodiment of this application;

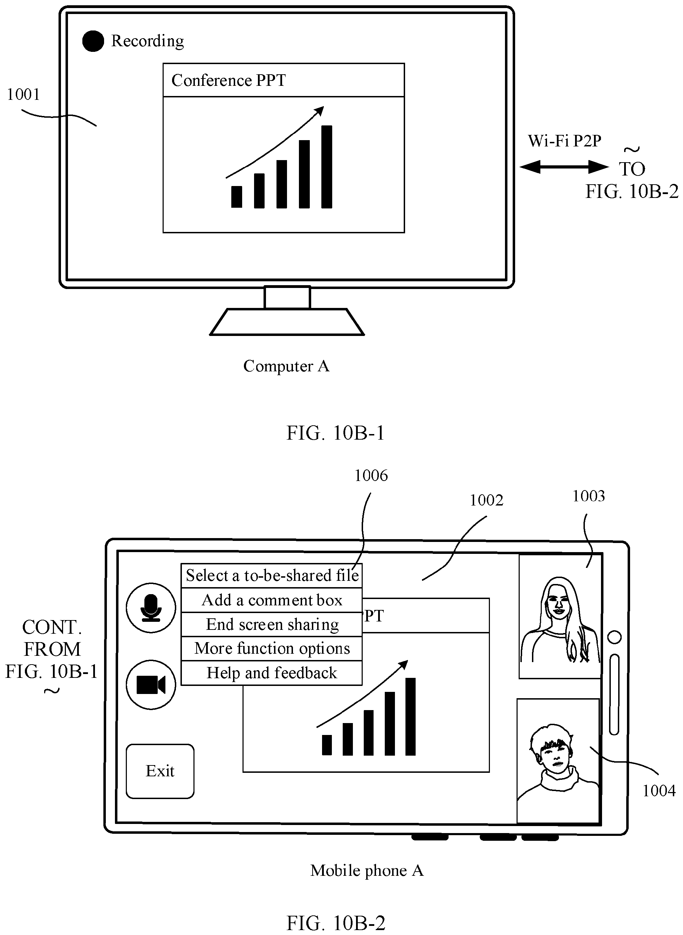

FIG. 10B-1 and FIG. 10B-2 are a schematic diagram of a user interface according to an embodiment of this application;

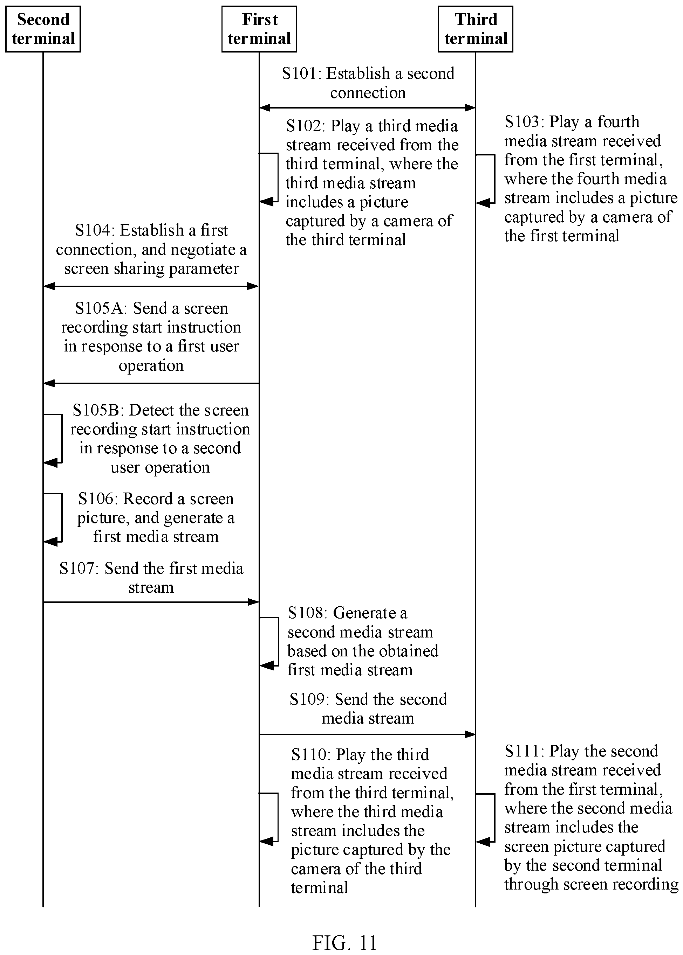

FIG. 11 is a flowchart of a screen sharing method according to an embodiment of this application;

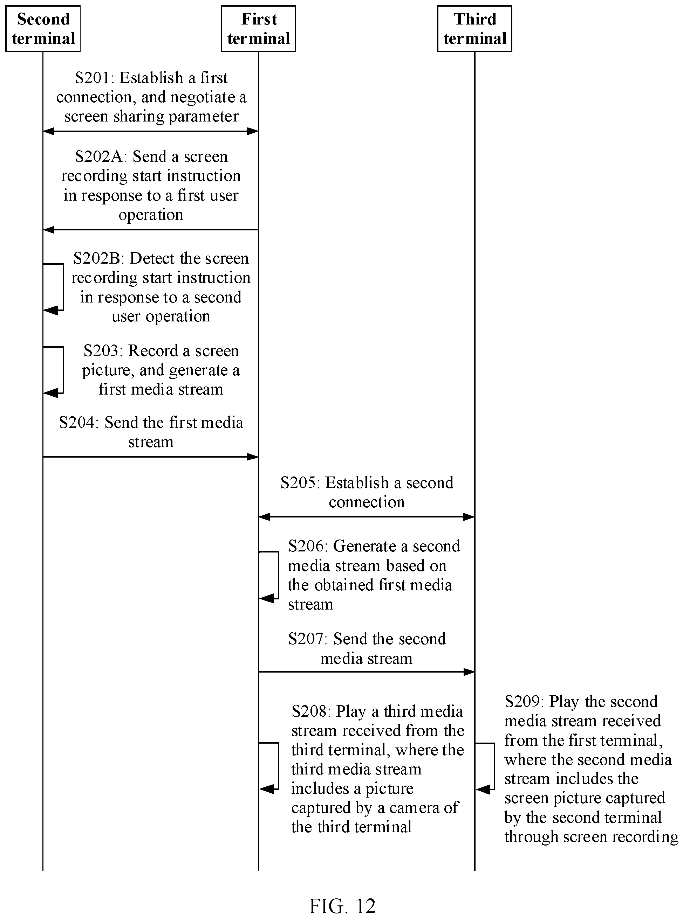

FIG. 12 is a flowchart of a screen sharing method according to an embodiment of this application;

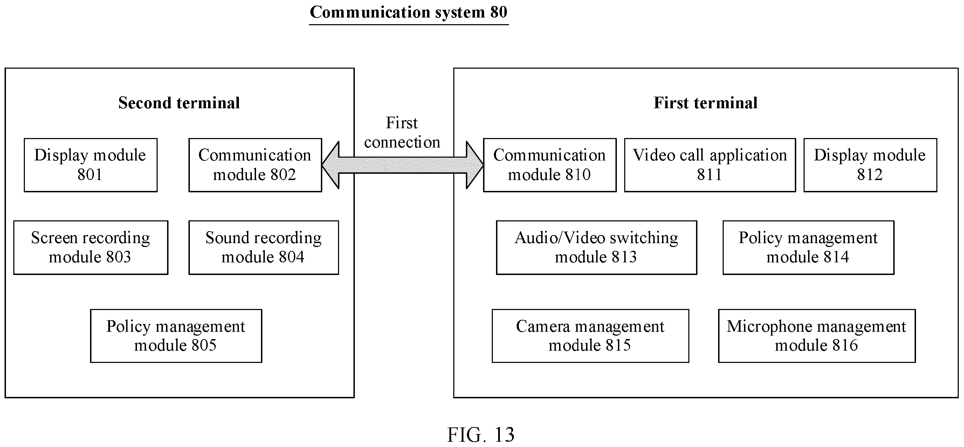

FIG. 13 is a schematic diagram of a software module of a communication system according to an embodiment of this application;

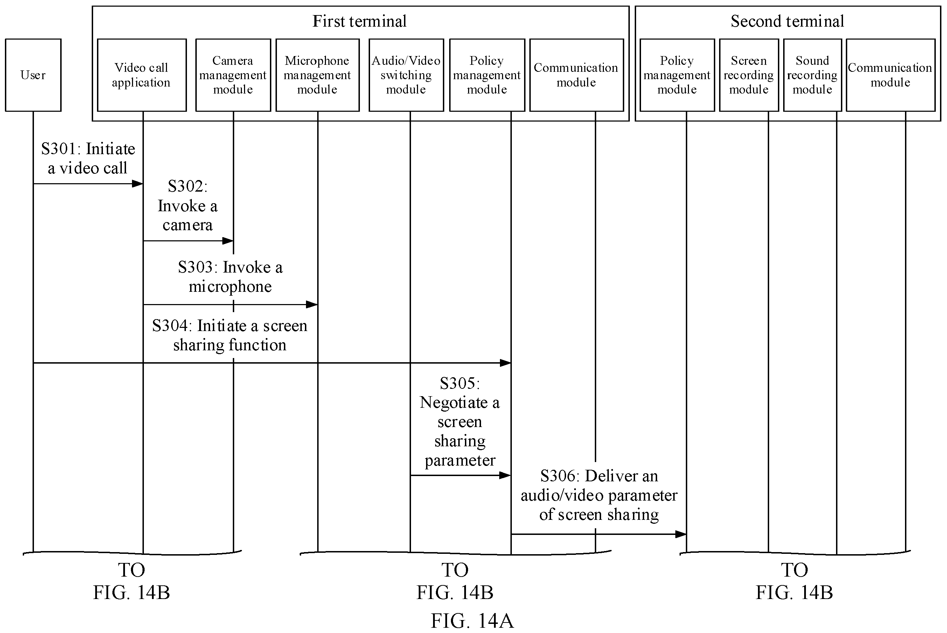

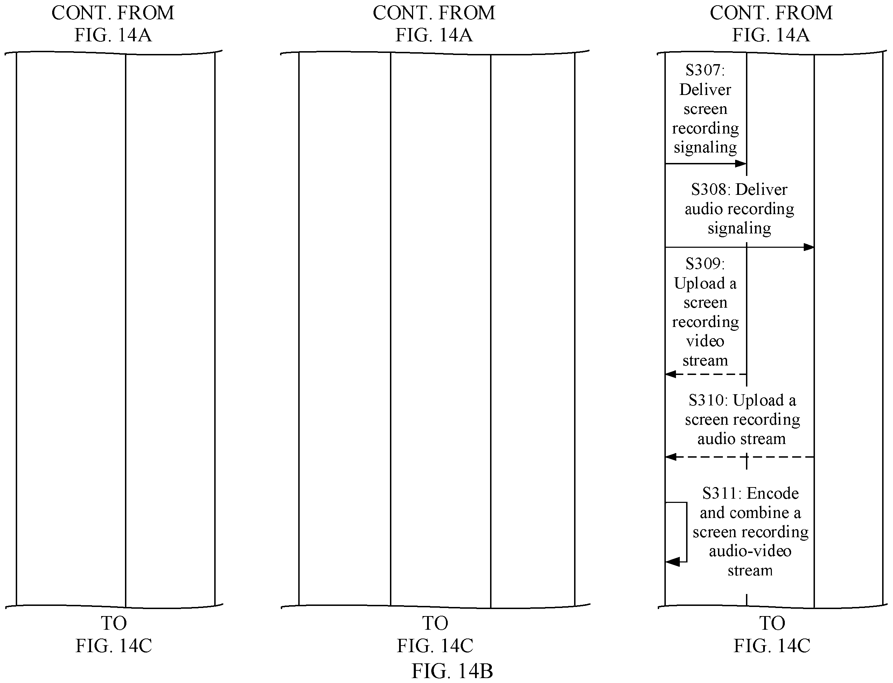

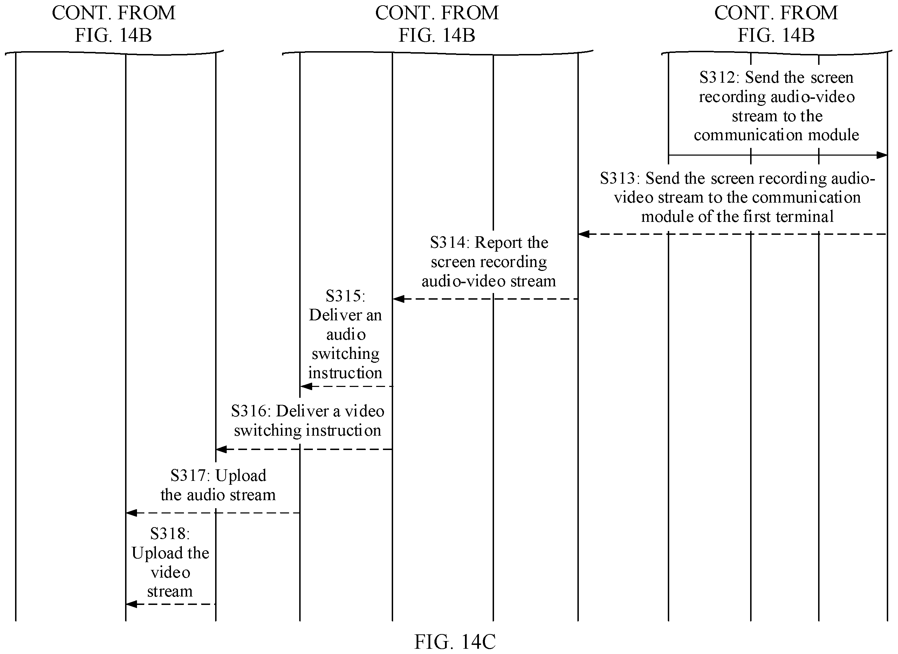

FIG. 14A to FIG. 14C are a flowchart of screen sharing according to an embodiment of this application; and

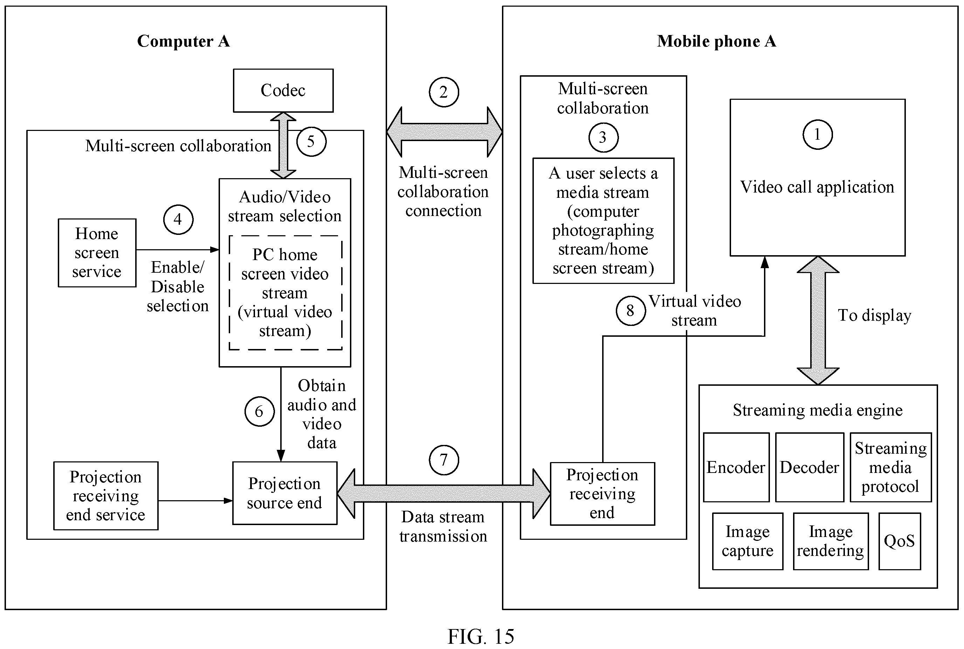

FIG. 15 is a schematic diagram of a screen sharing process according to an embodiment of this application.

### DESCRIPTION OF EMBODIMENTS

The following clearly describes the technical solutions in embodiments of this application in detail with reference to the accompanying drawings. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In addition, in descriptions of embodiments of this application, "a plurality of" means two or more.

A term "user interface (user interface, UI)" in the following embodiments of this application is a medium interface for interaction and information exchange between a user and an application (application, APP) or an operating system (operating system, OS), and implements conversion between an internal form of information and a form acceptable to the user. The user interface is source code written in a specific computer language such as java or an extensible markup language (extensible markup language, XML). The source code of the interface is parsed and rendered on an electronic device, and finally is presented as user-recognizable content. A common representation form of the user interface is a graphical user interface (graphical user interface, GUI), and is a user interface that is displayed in a graphical manner and that is related to a computer operation. The user interface may be visual interface element such as a text, an icon, a button, a menu, a tab, a text box, a dialog box, a status bar, a navigation bar, or a widget displayed on a display of the electronic device.

In a current mainstream multi-person video conference scenario, a terminal needs to install conferencing software, and joins the conference by using a conference ID, to join a video conference. When the terminal joins the video conference, the conferencing software provides a screen sharing function based on a screen recording, so that attendees view conference content in a sharing manner.

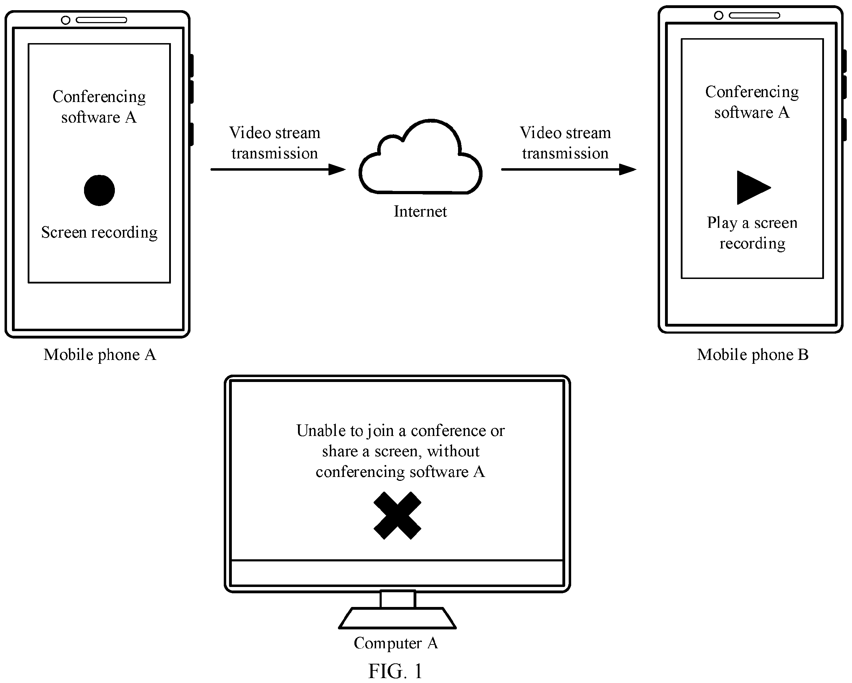

In a video conference scenario shown in FIG. 1, both a mobile phone A and a mobile phone B install conferencing software A, and may enter a conference by logging in to a same conference ID.

In FIG. 1, the mobile phone A may share a home screen or a file of the mobile phone A based on a screen recording function, and then a screen recording video stream of the mobile phone A may be transmitted to the mobile phone B through the Internet. The mobile phone B may play the received screen recording video stream of the mobile phone A. In this way, the mobile phone A, the mobile phone B, and another terminal connected to join a conference may perform a video conference, to perform conference communication instantly and online.

Due to factors such as a development capability and a development progress, some conferencing software do not support all types of terminals or all types of operating systems.

For example, the conferencing software A supports only a mobile phone client, and does not support a personal computer (personal computer, PC) client. Therefore, the computer A cannot install the conferencing software A, and cannot join a conference to participate in screen sharing. If a conference demonstration material is stored on a computer A, but the computer A cannot join the conference to participate in screen sharing, the computer A needs to send the conference demonstration material to a terminal that may participate in a screen sharing function, for example, the mobile phone A. This is very inconvenient for a user.

For a terminal that does not install or cannot install conferencing software, if the terminal wants to join the conference to participate in screen sharing, a browser application may be used. The user may enter a conference link and a login account corresponding to the conference ID in the browser application, to enter the conference. A process is cumbersome. Essence of joining the conference by using the conferencing software or the browser application is the same, and is performing the video conference by using a medium that may carry a conferencing application on the terminal. For another example, two persons are discussing work by using video call software (for example, MeeTime or WeChat), and need to demonstrate a material on a PC. A solution may be to send a material to a peer end on a platform such as Email or communication software, or reschedule a network conference, to wait both parties to join the conference and share the material. However, the solutions have cumbersome steps and low sharing efficiency for the user.

This application provides a screen sharing method. The method may be applied to the related electronic device and system provided in this application. The electronic device may include terminal devices such as a mobile phone, a tablet device (portable Android device, PAD), a personal computer (personal computer, PC), an intelligent television, and an electronic conference whiteboard. A specific type of the electronic device is not limited in this application.

A multi-screen collaboration function is a distributed communication technology. The multi-screen collaboration function may implement collaborative work across operating systems or across devices. For example, after the mobile phone is connected to the PC, the mobile phone and the PC may share a resource and perform a collaborative operation, to improve event processing efficiency. In the screen sharing method provided in this application, a first terminal and a second terminal may be supported to be in the multi-screen collaboration function, so that the second terminal shares screen interface content (for example, a screen recording picture) with a video call app on the first terminal, and when a third terminal has a video call with the first terminal, the third terminal may view, by using the video call app, the interface content shared by the second terminal, without a need to use a conferencing application.

Display content of a media stream (including an audio stream and a video stream) sent by the first terminal to the third terminal includes but is not limited to the following three cases:

1. The display content is edited by the first terminal.

After the first terminal receives a video stream captured by the second terminal, a user may perform some control operations on a first terminal side, to edit, set, or adjust the video stream, generate a new video stream, and send the new video stream to the third terminal.

For example, the user may make some comments in a video picture of the first terminal. The comments and the original video picture are combined into a new video picture and sent to the third terminal.

For another example, the user may set that a video picture sent by the first terminal to the third terminal not only includes a screen recording picture of the second terminal, but also includes a portrait that is of the user and that is captured by a camera of the first terminal. In this way, a third terminal side not only displays the screen recording picture from the second terminal, but also displays the portrait of the user of the first terminal. Therefore, the user has better video call experience.

In addition, a picture parameter may be further adjusted in a video call screen of the first terminal. The picture parameter may include one or more of the following: an image cropping size, a color temperature of an image, a beauty/bodybuilding type, a filter type, a sticker option, and the like. The image cropping size may be 3:3, 3:4, 9:16, or the like. A color temperature calibration mode of the image may be a sunlight, fluorescence, incandescent bulb, shadow, or cloudy day calibration mode, or the like. The beauty/bodybuilding type may be Head, Slim, Smooth, White, Eye, Acne, or the like. The filter type may be Japanese, Texture, Bright, Soft, Cyberpunk, or the like. A sticker may be Expression, Animal, Landscape, Illustration, or the like.

Therefore, the first terminal may adjust, based on an editing capability of the first terminal, an image captured by the second terminal, to generate a new display picture and send the new display picture to the third terminal. This brings use convenience to the user of the first terminal. 2. The display content is edited by the second terminal.

After the second terminal generates a screen recording picture, a user may perform some control operations on a second terminal side, to edit, set, or adjust the video stream, generate a new video stream, and send the new video stream to the first terminal.

For example, the user may make some comments on the screen recording picture of the second terminal. The comments and the original screen recording picture are combined into a new video picture and sent to the first terminal. The first terminal sends the new video picture to the third terminal.

For another example, the user may set that a video picture sent by the second terminal to the first terminal not only includes a screen recording picture of the second terminal, but also includes a portrait that is of the user and that is captured by a camera of the second terminal. In this way, a first terminal side and a third terminal side not only display the screen recording picture from the second terminal, but also display the portrait of the user of the second terminal. Therefore, the user has better video call experience.

In addition, a picture parameter may be further adjusted in a user interface of the second terminal. The picture parameter may include one or more of the following: an image cropping size, a color temperature of an image, a beauty/bodybuilding type, a filter type, a sticker option, and the like. Therefore, the second terminal may adjust, based on an editing capability of the second terminal, an image captured by the second terminal, to generate a new display picture and send the new display picture to the first terminal. This brings use convenience to the user of the second terminal.

3. The display content is collaboratively edited by the first terminal and the second terminal. With reference to the descriptions of the foregoing two aspects, in an implementation, the first terminal and the second terminal each may have a video picture editing function. In this way, the first terminal and the second terminal may collaboratively complete editing of the video picture, to be close to display effect that the user wants to achieve as much as possible. This brings convenience to users of both the first terminal and the second terminal, and avoids a case in which editing display effect cannot satisfy both users when the first terminal or the second terminal separately edits a display picture.

For example, after the second terminal edits a screen recording picture, the first terminal may edit the edited picture again. After the first terminal or the second terminal edits a screen recording picture, a display picture is synchronized to display interfaces of the first terminal and the second terminal.

Further, after the first terminal sends a display effect adjustment instruction to the second terminal, the second terminal may further perform compatibility processing on the instruction, so that the second terminal can effectively complete adjustment of corresponding display effect in response to the processed instruction.

Because the first terminal and the second terminal may have different device types and device models, in response to a user operation that the user adjusts the display effect, the first terminal may generate some instructions that are not supported or cannot be identified by the second terminal, and the second terminal may not directly adjust the interface display effect in response to these instructions.

The second terminal performs compatibility processing on the instruction, so that the second terminal can respond to an operation performed by the user on the first terminal, and the first terminal can control the second terminal to adjust the interface display effect.

It may be learned from the foregoing situation that, in addition to a case in which the second terminal may have a capability of editing a screen recording picture or another video stream, for a screen recording picture or another video stream from the second terminal, the first terminal may have a capability of editing the screen recording picture or the another video stream. This enhances effect of controlling the display interface of the second terminal by the first terminal, and improves use experience of the user.

In this embodiment of this application, that the first terminal displays an image of the second terminal may be that the first terminal transmits an image from the second terminal through a data stream channel collected by the camera of the first terminal. In other words, the first terminal originally transmits, through the data stream channel, data of an image captured by the camera of the first terminal. However, in a scenario of this embodiment of this application, the data stream channel is used to transmit a screen recording data stream or another video stream from the second terminal. Therefore, an upper-layer application of the first terminal does not need to perceive whether a displayed image comes from the first terminal or the second terminal. The video stream captured by the second terminal is equivalent to a video stream captured by a remote camera of the first terminal. The first terminal can send the obtained image of the second terminal to the upper-layer application, without a need to modify a manner in which a third-party application invokes a system interface, in other words, without requiring a third-party application to adapt, to expand a use scenario of screen sharing between the first terminal and the second terminal. According to the method provided in this application, the second terminal may quickly share the screen interface content with the first terminal and the third terminal. This step is simple, fast, and efficient, to further improve office efficiency.

For example, in the mainstream multi-person video conference scenario, participation in the video conference depends on installation of the conferencing software on the terminal, and the conferencing software further needs to provide a screen sharing function based on a screen recording.

In the technical solution provided in this application, assuming that the mobile phone A and the mobile phone B are in a conference by using video conferencing software or the video call software, a conference material that needs to be demonstrated is on the computer A. Therefore, the computer A does not need to install the video conferencing software or the video call software, and the mobile phone A does not need to support the screen sharing function based on a screen recording. When the mobile phone A is connected to the computer A, based on the multi-screen collaboration function, the computer A may inject demonstration content of the screen recording into a camera of the mobile phone A, and the mobile phone B views, by using a received video stream of a camera of the mobile phone A, the conference material from screen sharing of the computer A. In the technical solution provided in this application, the user can implement the cross-device screen sharing function on an app that supports only a video call, and it is unnecessary for the terminal to install the conferencing software.

First, a communication system provided in an embodiment of this application is described.

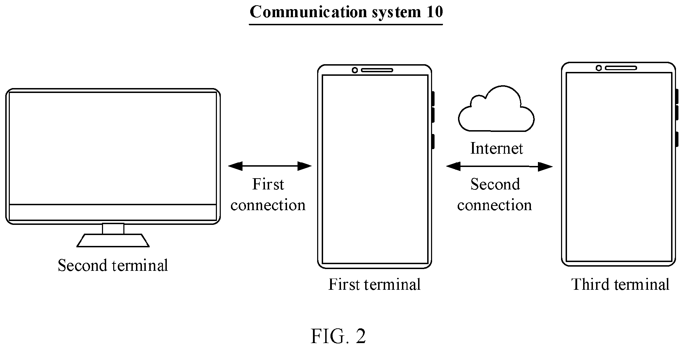

FIG. 2 shows a communication system 10 according to an embodiment of this application.

The communication system 10 may include a plurality of intelligent terminal devices, and a communication connection is established between the plurality of terminal devices. The terminal device may be a smartphone, a notebook computer, a home screen computer, a tablet computer, an electronic conference whiteboard, a smart screen (intelligent television), or another type of electronic device, for example, may further include a home screen computer, a laptop computer, a handheld computer, an augmented reality (augmented reality, AR) device, a virtual reality (virtual reality, VR) device, an artificial intelligence (artificial intelligence, AI) device, a vehicle, a game console, or another intelligent wearable device. This is not limited in this application. In this embodiment, the terminal device may also be briefly referred to as a terminal. The terminal device is usually an intelligent electronic device that may provide a user interface, may interact with a user, and provides a service function for the user.

Each terminal device in the communication system 10 may be provided with an Android^{®} system, a Windows^{®} system, iOS^{®}, macOS^{®}, a Linux^{®} system, a HarmonyOS^{®} system (HarmonyOS, HOS), or another type of operating system. Operating systems of terminal devices in the communication system 10 may be the same or different. This is not limited in this application. In some embodiments, a plurality of terminals are all provided with the HarmonyOS^{®} system. A system including the plurality of terminals may be referred to as a HarmonyOS^{®} super virtual terminal (super virtual device), or may be referred to as a HarmonyOS^{®} super terminal. In the system, the capabilities of the plurality of terminals are integrated by using a distributed technology, and are stored in a virtual hardware resource pool. The capabilities of the terminals are uniformly managed, scheduled, and integrated based on a service requirement, to externally provide a service, so that a fast connection, capability complementation, and resource sharing are implemented between different terminals.

As shown in FIG. 2, the communication system 10 includes a first terminal, a second terminal, and a third terminal. Each terminal may be provided with a camera.

A first connection is established between the first terminal and the second terminal, and a second connection is established between the first terminal and the third terminal. In this embodiment of this application, a type of the first connection or a type of the second connection is not limited. The first connection or the second connection may be a wireless connection, or may be a wired connection.

In some embodiments, the second connection may be an Internet Internet connection, and the first terminal and the third terminal implement a connection and communication through the Internet, for example, perform a video call. The first terminal and the second terminal may access the Internet through a wireless communication network (for example, a wireless fidelity (wireless fidelity, Wi-Fi) network) or a mobile communication network (for example, a mobile communication 2G/3G/4G/5G network).

The second terminal may record a home screen, and then send a recorded video stream to the first terminal through the first connection. The first connection may include a wired connection, for example, a universal serial bus (universal serial bus, USB) connection; or a wireless connection, for example, a Bluetooth (Bluetooth, BT) connection, a wireless fidelity (wireless fidelity, Wi-Fi) connection, or a hotspot connection, to implement communication between the first terminal and the second terminal in a case of a same account, no account, or different accounts.

In some embodiments, the plurality of terminals may log in to a same account, to implement a connection and communication through the Internet. The plurality of terminals may alternatively log in to different accounts, but are connected in a binding manner. For example, the first terminal and the second terminal may log in to different accounts. In a device management application, the first terminal binds the second terminal to the first terminal, and then is connected to the second terminal by using the device management application.

A type of the communication connection is not limited in this embodiment of this application. The terminals may transmit and exchange data based on various communication connection types. In addition, the terminals may alternatively perform a connection and communication with each other in any several manners in the foregoing manners. This is not limited in this embodiment of this application.

The terminal device may be provided with a mobile communication module and a wireless communication module.

The mobile communication module may provide a wireless communication solution that is applied to the terminal and that includes 2G/3G/4G/5G.

The wireless communication module may include a Bluetooth (Bluetooth, BT) module and/or a wireless local area network (wireless local area network, WLAN) module.

The Bluetooth module may provide one or more Bluetooth communication solutions including classic Bluetooth (Bluetooth 2.1) or Bluetooth low energy (Bluetooth low energy, BLE), and the WLAN module may provide one or more WLAN communication solutions including wireless fidelity peer-to-peer (wireless fidelity peer-to-peer, Wi-Fi P2P), a wireless fidelity local area network (wireless fidelity local area network, Wi-Fi LAN), or a wireless fidelity software access point (wireless fidelity software access point, Wi-Fi softAP).

In some embodiments, Wi-Fi P2P is that devices in a wireless network are allowed to be connected to each other in a peer-to-peer manner without a need to use a wireless router, and may also be referred to as wireless fidelity direct (Wi-Fi direct) in the Android^{®} system. Devices between which a Wi-Fi P2P connection is established may directly exchange data through Wi-Fi (which needs to be in a same frequency band) without connecting to a network or a hotspot, to implement peer-to-peer communication, for example, transmit data such as a file, a picture, and a video. Compared with Bluetooth, Wi-Fi P2P has advantages such as faster search speed, a faster transmission speed, and a farther transmission distance.

The first terminal may replace the recorded video stream from the second terminal with a photographed video stream from a camera of the first terminal. In this way, when the first terminal performs a video call with the third terminal, an interface of the third terminal displays the recorded video stream from the second terminal rather than a picture photographed by the camera of the first terminal. In this way, the second terminal can share a screen and participate in a video conference, without a cumbersome step.

It should be noted that the communication system 10 shown in FIG. 2 is merely used to assist in describing the technical solutions provided in embodiments of this application, and constitutes no limitation in embodiments of this application. In an actual service scenario, the communication system 10 may include more or fewer terminal devices. A quantity of terminals, a connection manner, and the like are not limited in this application.

The following provides example descriptions of a structure of the electronic device provided in this embodiment of this application.

The electronic device provided in this embodiment of this application may be any electronic device in the communication system 10 shown in FIG. 2, and may be the first terminal, the second terminal, the third terminal, or another electronic device described in this embodiment of this application. This is not limited herein. An electronic device 100 is used as an example herein for description.

In this embodiment of this application, the electronic device 100 may include but is not limited to a mobile phone, a tablet computer, a smart screen (smart television), an electronic conference whiteboard, a home screen computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device 100 is not limited in this embodiment of this application.

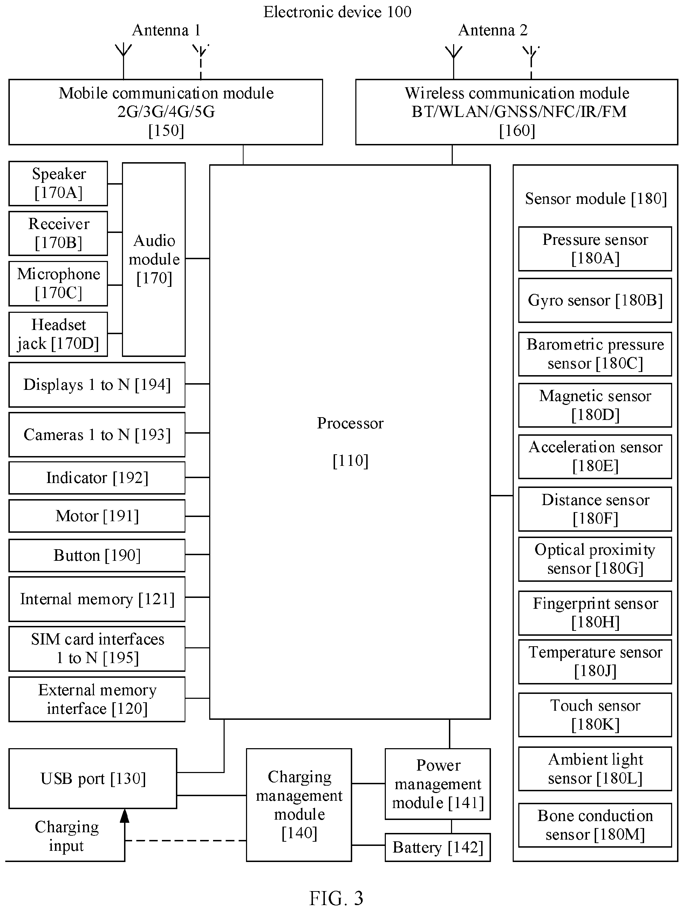

FIG. 3 is a schematic diagram of a hardware structure of an electronic device 100 according to an embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that is just used or repeatedly used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

The I2C interface is a bidirectional synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be used for audio communication, and analog signal sampling, quantization, and coding. In some embodiments, the audio module 170 may be coupled to the wireless communication module 160 through the PCM bus interface. In some embodiments, the audio module 170 may alternatively transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through the Bluetooth headset.

The MIPI interface may be configured to connect the processor 110 and peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is a port that conforms to a USB standard specification, and may be specifically a mini USB port, a micro USB port, a USB Type C port, or the like. The USB port 130 may be configured to be connected to the charger to charge the electronic device 100, or may be configured to transmit data between the electronic device 100 and a peripheral device, or may be configured to be connected to a headset, to play audio by using the headset. The interface may be further configured to be connected to another electronic device, for example, an AR device.

It can be understood that an interface connection relationship between modules illustrated in this embodiment of the present invention is merely an example for description, and does not constitute a limitation on the structure of the electronic device 100. In some other embodiments of this application, different interface connection manners in the foregoing embodiments or a combination of a plurality of interface connection manners may alternatively be used for the electronic device 100.

The charging management module 140 is configured to receive a charging input from the charger. The charger may be a wireless charger, or may be a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 while charging the battery 142. The power management module 141 is configured to be connected to the battery 142, the charging management module 140, and the processor 110. The power management module 141 receives an input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium/high frequency signal. The demodulator is configured to demodulate a received electromagnetic wave signal into a low-frequency baseband signal. Then, the demodulator transfers, to the baseband processor for processing, the low-frequency baseband signal obtained through demodulation. The low-frequency baseband signal is processed by the baseband processor and then transferred to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute a program instruction to generate or change display information. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include 1 or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. The NPU may be used to implement applications such as intelligent cognition of the electronic device 100, for example, image recognition, facial recognition, voice recognition, and text understanding.

The internal memory 121 may include one or more random access memories (random access memory, RAM) and one or more nonvolatile memories (nonvolatile memory, NVM).

The random access memory has characteristics such as a fast read/write speed and a volatile characteristic. The volatile characteristic means that once power is cut off, data stored in the RAM disappears. Usually, static power consumption of the random access memory is very low, and running power consumption is large. Data in the RAM is memory data, and may be read at any time. Data disappears once power is cut off.

The nonvolatile memory has a volatile characteristic and stable storage data. A nonvolatile characteristic means that data stored in the nonvolatile memory does not disappear after power is cut off, and the nonvolatile memory may store data for a long period of time after power is cut off. A data packet in the NVM includes application data, and may be stably stored in the NVM for a long period of time. The application data is content written in a running process of an application or a service process, for example, a photo or a video obtained by a photographing application or a text edited by a user in a document application.

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, where for example, a 5th generation DDR SDRAM is usually referred to as a DDR5 SDRAM), and the like.

The nonvolatile memory may include a magnetic disk storage (magnetic disk storage) device, a flash memory (flash memory), and the like.

The magnetic disk storage device is a memory in which a disk serves as a storage medium, and is featured by a large storage capacity, a high data transmission rate, and long-term storage of stored data.

The flash memory may include a NOR flash, a NAND flash, a 3D NAND flash, and the like based on an operating principle; may include a single-level cell (single-level cell, SLC), a multi-level cell (multi-level cell, MLC), a triple-level cell (triple-level cell, TLC), a quad-level cell (quad-level cell, QLC), and the like based on an order of a level of a storage unit; and may include a universal flash storage (English: universal flash storage, UFS), an embedded multimedia card (embedded multimedia Card, eMMC), and the like based on a storage specification.

The random access memory may be directly read and written by the processor 110, and may be configured to store an executable program (for example, a machine instruction) of an operating system or another running program, and may be further configured to store data of a user and data of an application.

The nonvolatile memory may store an executable program, data of a user and an application, and the like, and may be loaded into the random access memory in advance, so that the processor 110 directly performs reading and writing.

The external memory interface 120 may be configured to be connected to an external nonvolatile memory, to expand a storage capacity of the electronic device 100. The external nonvolatile memory communicates with the processor 110 through the external memory interface 120, to implement a data storage function. For example, a file such as music or a video is stored in the external nonvolatile memory.

The electronic device 100 may implement an audio function, for example, music playing or sound recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be configured to listen to music or answer a call in a hands-free mode by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to listen to a voice. The microphone 170C, also referred to as a "mike" or a "mic", is configured to convert a sound signal into an electrical signal. When making a call or sending voice information, a user may make a sound near the microphone 170C through the mouth of the user, to input a sound signal into the microphone 170C. At least one microphone 170C may be disposed in the electronic device 100. In some other embodiments, the electronic device 100 may be provided with two microphones 170C, to implement a noise reduction function in addition to collecting a sound signal. In some other embodiments, three, four, or more microphones 170C may alternatively be disposed in the electronic device 100, to collect a sound signal, implement noise reduction, and identify a sound source, to implement a directional sound recording function and the like.

The headset jack 170D is configured to be connected to a wired headset. The headset jack 170D may be a USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface. The pressure sensor 180A is configured to sense a pressure signal, and may convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed a Messaging application icon, an instruction for viewing an SMS message is executed. When a touch operation whose touch operation intensity is greater than or equal to the first pressure threshold is performed on the Messaging application icon, an instruction for newly creating an SMS message is executed. The gyro sensor 180B may be configured to determine a moving posture of the electronic device 100. In some embodiments, an angular velocity of the electronic device 100 around three axes (that is, axes x, y, and z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a motion sensing game scenario.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a flip phone, the electronic device 100 may detect opening and closing of a flip cover based on the magnetic sensor 180D, and Further, a feature such as automatic unlocking upon opening of the flip leather case is set based on a detected opening or closing state of the flip leather case.

The acceleration sensor 180E may detect accelerations in various directions (usually on three axes) of the electronic device 100. When the electronic device 100 is still, a magnitude and a direction of gravity may be detected. The acceleration sensor 180E may be further configured to recognize a posture of the electronic device, and is applied to applications such as switching between a landscape mode and a portrait mode and a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch device". The touch sensor 180K may be disposed on the display 194. The touch sensor 180K and the display 194 form a touchscreen, which is also referred to as a "touchscreen". The touch sensor 180K is configured to detect a touch operation performed on or near the touch sensor 180K. The touch sensor may transfer the detected touch operation to the application processor, to determine a touch event type. The display 194 may be configured to provide a visual output related to the touch operation. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also contact a pulse of a human body, to receive a blood pressure beating signal. In some embodiments, the bone conduction sensor 180M may alternatively be disposed in a headset, to be combined into a bone conduction headset. The audio module 170 may obtain a speech signal through parsing based on the vibration signal, of the vibration bone of the vocal-cord part, that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing or audio playing) may correspond to different vibration feedback effects. The motor 191 may also correspond to different vibration feedback effects for touch operations performed on different areas of the display 194. Different application scenarios (for example, a time reminder, message receiving, an alarm clock, and a game) may also correspond to different vibration feedback effects. A touch vibration feedback effect may alternatively be customized.

The indicator 192 may be an indicator light, and may be configured to indicate a charging status and a power change, or may be configured to indicate a message, a missed call, a notification, or the like.

The SIM card interface 195 is configured to be connected to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 together. The plurality of cards may be of a same type or different types. The SIM card interface 195 is compatible with different types of SIM cards. The SIM card interface 195 may also be compatible with an external memory card. The electronic device 100 interacts with a network by using the SIM card, to implement functions such as conversation and data communication. In some embodiments, an eSIM, namely, an embedded SIM card, is used for the electronic device 100. The eSIM card may be embedded into the electronic device 100, and cannot be separated from the electronic device 100.

A screen sharing method provided in embodiments of this application may be applied to a plurality of service scenarios, including but not limited to:

### (1) Video conference scenario

For example, a first terminal and a third terminal perform a video conference by using conferencing software. A conference material that needs to be demonstrated by the first terminal is on a second terminal. The first terminal may be connected to the second terminal. The second terminal sends, to the first terminal, a screen video stream recorded by the second terminal, that is, the conference material that needs to be demonstrated, and then the first terminal sends the demonstrated conference material to the third terminal. In this way, when the third terminal does not establish a connection to the second terminal, and the second terminal does not access the video conference by using the conferencing software, the third terminal may display demonstration content recorded by the second terminal.

### (2) Video call scenario

For example, a first terminal and a third terminal are performing video chatting by using video call software. A topic is discussed in a chatting process, and a material related to the topic is stored on the second terminal, for example, a working document and a child photo.

The first terminal may be connected to the second terminal, to facilitate display to a peer party, so that the peer party views the material. The second terminal sends, to the first terminal, the screen video stream recorded by the second terminal, that is, a picture or a document that needs to be displayed, and then the first terminal sends, to the third terminal, the picture or the document that needs to be displayed.

In this way, when the third terminal does not establish a connection to the second terminal, the third terminal may display display content recorded by the second terminal. When the first terminal keeps connected to the third terminal, the first terminal may quickly and conveniently display content of the second terminal to the third terminal, without a cumbersome operation, to bring a user more convenient video call experience.

### (3) Livestreaming scenario

In the live scenario, a first terminal is connected to a second terminal, and the second terminal stores some demonstration materials. A streamer may select, as current livestreaming content, an image photographed by the first terminal, or switch the current livestreaming content to a demonstration material on the second terminal. The second terminal may send a video stream to the first terminal, and the first terminal may upload the video stream to a livestreaming server, and the livestreaming server distributes the video stream to more users for viewing.

In this process, the streamer may control switching of whether current display content is a video stream photographed by a camera of the first terminal or a video stream recorded by the second terminal.

The foregoing described scenarios are merely examples for description, and constitute no limitation on another embodiment of this application. This is not limited to the foregoing scenarios. The screen sharing method provided in this embodiment of this application may be applied to another social scenario, an office scenario, a shopping scenario, or the like.

With reference to the descriptions of the communication system 10, FIG. 4 to FIG. 8B-1 to FIG. 8B-3 show a video conferencing service scenario and a related user interface.

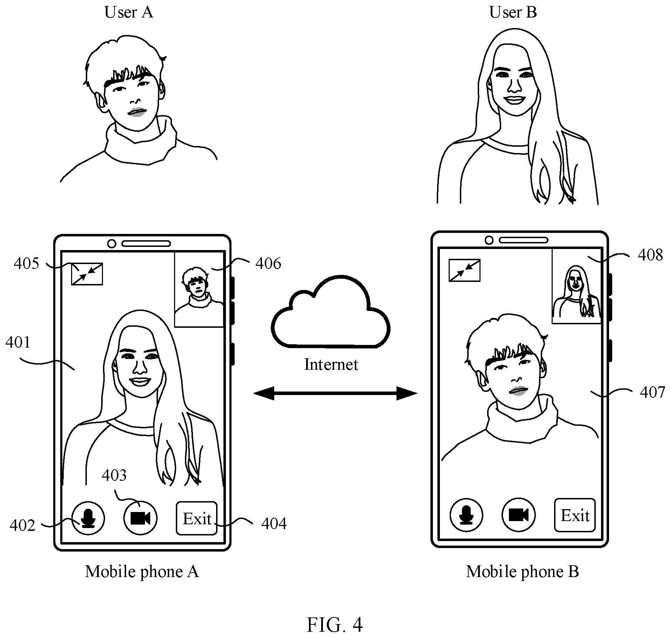

As shown in FIG. 4, a user A and a user B are performing a video conference. The user A uses a mobile phone A, the user B uses a mobile phone B, and the mobile phone A and the mobile phone B transmit video data through the Internet by using a video call application.

As shown in FIG. 4, an image of a peer party, namely, the user B is displayed in a main window 401 of a video call user interface of the mobile phone A, that is, an image of the user B. The image of the user B is an image captured by a camera of the mobile phone B. The main window 401 is a window filling a screen, and the main window 401 may display a video stream that is of the mobile phone B and that is received by the mobile phone A, namely, the image of the user B.

The main window 401 further displays a voice on/off control 402, a camera on/off control 403, an "Exit" control 404, a camera switching control 405, a floating window 406, and the like. The floating window 406 may display an image that is of the user A and that is captured by a local camera of the mobile phone A.

When the user taps the camera switching control 405, the mobile phone A may switch a camera that currently captures an image, for example, may be switched from a front-facing camera to a rear-facing camera to capture the image.

Images displayed in the main window 401 and the floating window 406 may be exchanged. In other words, the main window 401 may display the image of the user A, and the floating window 406 displays the image of the user B. An image exchange method may be a method for switching a view size. To be specific, a window size of the floating window 406 and a window size of the main window 401 are exchanged. In addition, a method for switching a read video stream may alternatively be used. To be specific, a video stream obtained by the main window 401 and a video stream obtained by the floating window 406 are exchanged.

In this embodiment of this application, the main window and the floating window are distinguished based on a window nature (instead of a main body of the obtained video stream). To be specific, a window that displays a video image and that fills the screen is referred to as a main window, and a window that is superposed on the main window is referred to as a floating window. Usually, the floating window covers the main window and is movable, and the floating window has a small size, and occupies only a part of a display area of the main window. The user may manually drag a display location of the floating window.

In an implementation, when the user taps an area of the floating window 406, displayed images of the main window 401 and the floating window 406 may be exchanged. To be specific, a case in which the floating window 406 originally displays the image of the user A is switched to a case in which the main window 401 displays the image of the user A, and a case in which the main window 401 originally displays the image of the user B is switched to a case in which the floating window 406 displays the image of the user B.

A main window 407 of a video call user interface of the peer mobile phone B displays the image that is of the user A and that is received through the Internet, and the image of the user A is captured by a camera of the mobile phone A.

Similarly, a voice on/off control, a camera on/off control, an "Exit" control, a camera switching control, a floating window 408, and the like exist in the main window 407, and the floating window 408 displays an image that is of the user B and that is captured by a local camera of the mobile phone B.

Similarly, the floating window 408 covers the main window 407 and is movable. In an implementation, when the user taps an area of the floating window 408, displayed images of the main window 407 and the floating window 408 may be exchanged. To be specific, a case in which the floating window 408 originally displays the image of the user B is switched to a case in which the main window 407 displays the image of the user B, and a case in which the main window 407 originally displays the image of the user A is switched to a case in which the floating window 408 displays the image of the user A.

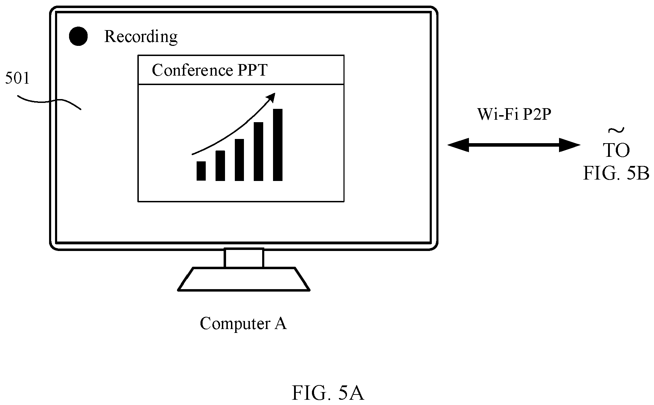

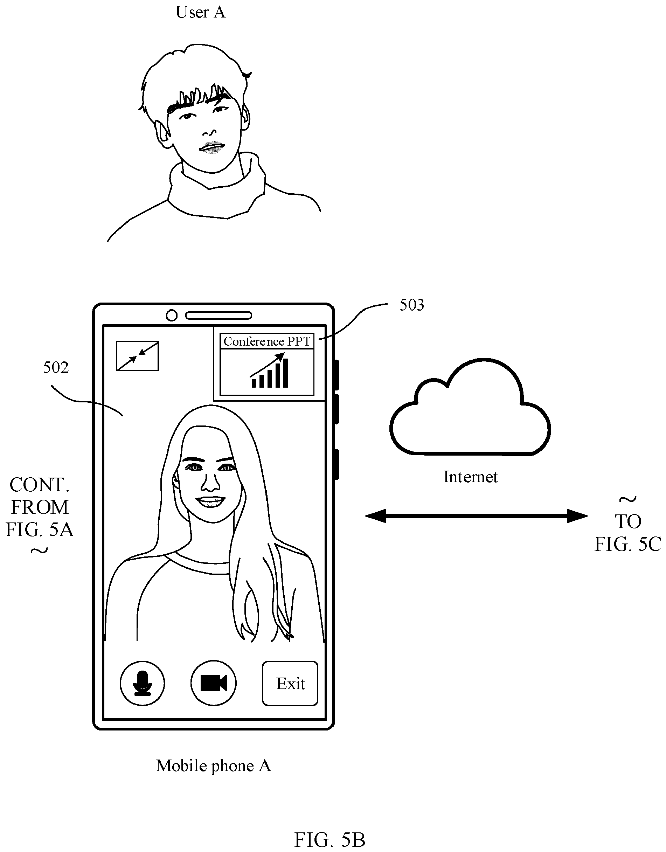

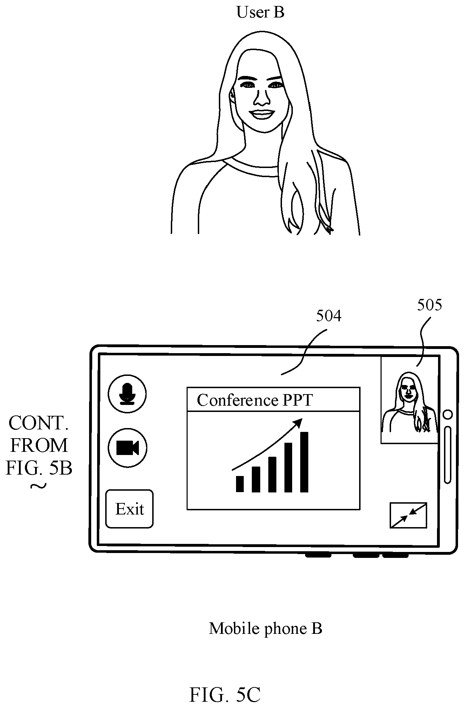

In some embodiments, as shown in FIG. 5A to FIG. 5C, a conference material that needs to be demonstrated by a user A is on a computer A, and a mobile phone A may establish a Wi-Fi P2P connection to the computer A. A connection is not limited to the Wi-Fi P2P connection. The connection between the mobile phone A and the computer A may alternatively be another type of wireless connection or a wired connection (for example, a USB connection). Examples are not listed one by one herein. The conference material is displayed in an interface 501 of the computer A. The computer A may record an interface 501, and then send a recorded media stream (including an audio stream, a video stream, and the like) to the mobile phone A through the connection. The mobile phone A may send the received recorded media stream from the computer A to a mobile phone B by using a video call application.

As shown in FIG. 5A to FIG. 5C, a main window 502 of a user interface of the mobile phone A displays an image that is of a user B, that is captured by the mobile phone B, and that is received by using the video call application, and a floating window 503 displays a received picture in the recording interface 501 of the computer A. The mobile phone B receives the media stream from the mobile phone A by using a video call application through a connection. A main window 504 of a user interface of the mobile phone B displays the picture in the recording interface 501 of the computer A instead of a picture that is of the user A and that is captured by the mobile phone A. The floating window 505 displays an image that is of the user B and that is captured by a camera of the mobile phone B.

In some embodiments, for convenience of viewing by the user, when the user taps an area of the floating window 503 in an interface of the mobile phone A, displayed images of the main window 502 and the floating window 503 may be exchanged.

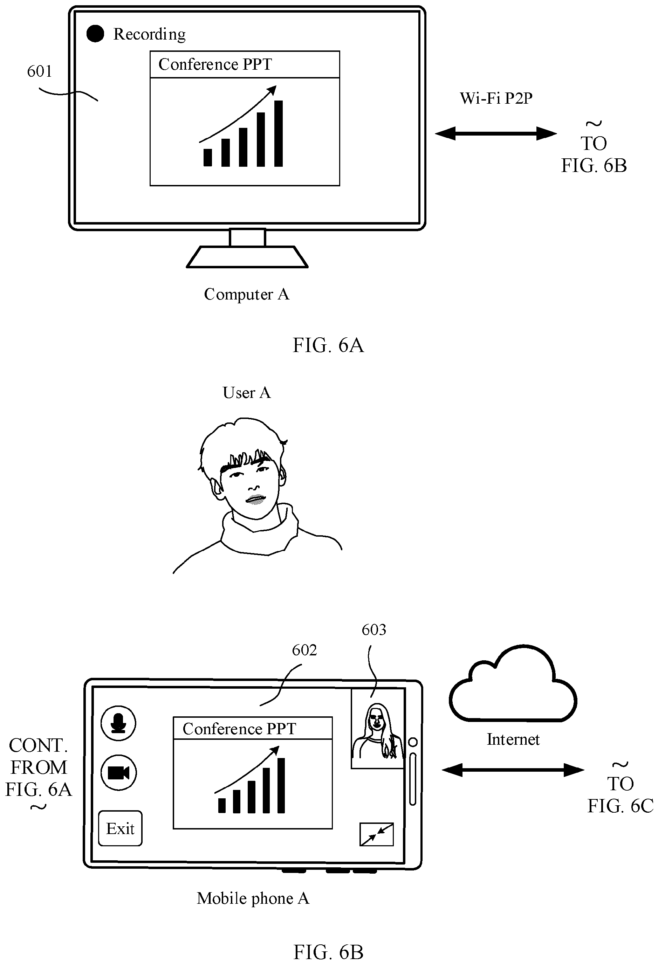

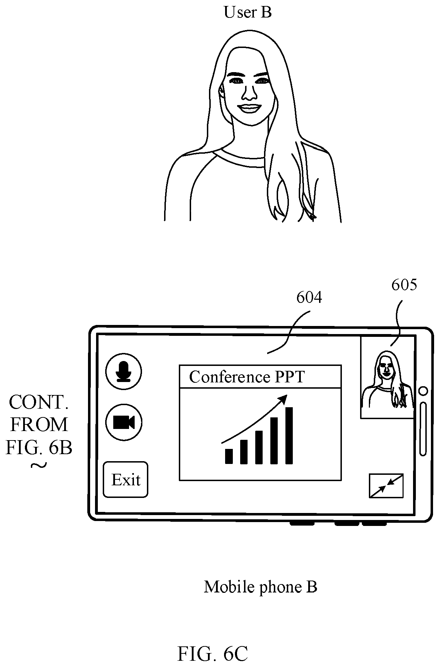

As shown in FIG. 6A to FIG. 6C, a conference material is displayed in an interface 601 of a computer A. The computer A may send a media stream (including an audio stream, a video stream, and the like) of a recording interface 601 to a mobile phone A. The mobile phone A may send the received recorded media stream from the computer A to the mobile phone B by using a video call application.

A main window 602 of a user interface of the mobile phone A displays a received picture in the recording interface 601 of the computer A. A floating window 603 displays an image that is of a user B, that is captured by the mobile phone B, and that is received by using a video call application. The mobile phone B receives the media stream from the mobile phone A by using a video call application through a connection. A main window 604 of a user interface of the mobile phone B displays the picture in the recording interface 601 of the computer A. The floating window 605 displays an image that is of the user B and that is captured by a camera of the mobile phone B. That is, the main window 602 of the mobile phone A and the main window 604 of the mobile phone B display the conference material, and a display area of the main window is large, to facilitate viewing by the user.

In some embodiments, the mobile phone A may not only send a received recorded picture of the computer A to the mobile phone B, but also send, to the mobile phone B at the same time, an image captured by a camera of the mobile phone A. In this way, a user of the mobile phone A and a user of the mobile phone B not only can view the conference material of the computer A, but also can see a portrait of a peer user. This is more convenient for visual communication between the user A and the user B.

As shown in FIG. 7A-1 to FIG. 7A-3, a conference material is displayed in an interface 701 of a computer A. The computer A may send a media stream (including an audio stream, a video stream, and the like) of a recording interface 701 to a mobile phone A. The mobile phone A may send the received recorded media stream from the computer A to the mobile phone B by using a video call application, and the mobile phone A may further send, to the mobile phone B, an image that is of the user A and that is captured by a camera of the mobile phone A.

A main window 702 of a user interface of the mobile phone A displays a received picture in the recording interface 701 of the computer A. The user interface of the mobile phone A may include two floating windows. A floating window 703 displays an image that is of a user B, that is captured by the mobile phone B, and that is received by using a video call application. A floating window 704 displays an image that is of a user A and that is captured by a camera of the mobile phone A. The mobile phone B receives the media stream from the mobile phone A by using a video call application through a connection. A main window 705 of a user interface of the mobile phone B displays the picture in the recording interface 701 of the computer A. The user interface of the mobile phone B may include two floating windows. A floating window 706 displays the image that is of the user A, that is captured by the mobile phone A, and that is received by using the video call application. A floating window 707 displays the image that is of the user B and that is captured by a camera of the mobile phone B.

In other embodiments, the mobile phone A or the mobile phone B may hide a floating window in which an image captured by a camera of the mobile phone A or the mobile phone B is located, to save screen display space and spare more screen areas to display a main window interface. Compared with FIG. 7A-1 to FIG. 7A-3, as shown in FIG. 7B-1 to FIG. 7B-3, only a floating window 703 is displayed in a user interface of a mobile phone A. The floating window 703 displays an image that is of a user B, that is captured by a mobile phone B, and that is received by using a video call application, and a floating window 704 that displays an image captured by a camera of the mobile phone A is hidden.

Only a floating window 706 is displayed in a user interface of the mobile phone B. The floating window 706 displays an image that is of a user A, that is captured by the mobile phone A, and that is received by using a video call application, and a floating window 707 that displays an image captured by a camera of the mobile phone B is hidden.

In some embodiments, the user may further add an editing operation such as scrawling, highlighting, and commenting to a display interface of the computer A or the mobile phone A. These editing operations may be combined with an original video picture, to generate a new media stream and then transmit the new media stream to the mobile phone B for display.

As shown in FIG. 8A-1 to FIG. 8A-3, in some embodiments, a mobile phone A may add an editing operation to a display picture.

As shown in FIG. 8A-1 to FIG. 8A-3, a conference material is displayed in an interface 801 of a computer A. The computer A may send a media stream (including an audio stream, a video stream, and the like) of a recording interface 801 to a mobile phone A. The mobile phone A displays the received recording interface 801 of the computer A in a main window 802. A user may further touch a display of the mobile phone A with a finger, and makes a mark, for example, a check mark 803, on a screen of the mobile phone A. The mobile phone A may combine the check mark 803 on the screen and an original media stream on the recording interface into a new media stream, and then send the media stream with the check mark 803 to the mobile phone B by using a video call application. A main window 804 of the mobile phone B may display the received media stream of the mobile phone A, which is consistent with display content in the main window 802 of the mobile phone A. In other words, content displayed in the main window 804 of the mobile phone B not only includes a conference material, but also includes a check mark 805.

As shown in FIG. 8B-1 to FIG. 8B-3, in some other embodiments, a computer A may also add an editing operation to a display picture.

As shown in FIG. 8B-1 to FIG. 8B-3, a conference material is displayed in an interface 810 of the computer A. A user may operate an input device such as a mouse, a keyboard, or a stylus, to make a mark, for example, a check mark 811 in the interface 810. A recording interface of the computer A is marked with the check mark 811. Then, the computer A sends a recorded media stream (including an audio stream and a video stream) to a mobile phone A. The mobile phone A displays the received recording interface 810 of the computer A in the main window 812. It may be learned that content displayed in the main window 812 of the mobile phone A also includes a check mark 813. Then, the mobile phone A sends the media stream with the check mark 813 to the mobile phone B by using a video call application. A main window 814 of the mobile phone B may display the received media stream of the mobile phone A, which is consistent with display content in the main window 812 of the mobile phone A. In other words, content displayed in the main window 814 of the mobile phone B not only includes a conference material, but also includes a check mark 815.

In other embodiments, the computer A and the mobile phone A may simultaneously edit a display interface, combine a new media stream, and transmit the new media stream to the mobile phone B for display. In this way, the computer A and the mobile phone A may collaboratively complete editing of the display picture, to be close to display effect that the user wants to achieve as much as possible, thereby improving a human-computer interaction function of the computer A and the mobile phone A, bringing convenience to users of the computer A and the mobile phone A, and avoiding a case in which editing display effect cannot satisfy both users when the computer A or the mobile phone A separately edits the display picture.

In some other embodiments, the mobile phone B may also edit the display interface, and synchronize the edited display interface to a display interface of the mobile phone A. In this way, a human-computer interaction function of the mobile phone B can also be improved, and convenience is also brought to a user of the mobile phone B.

It should be noted that, service scenarios and user interfaces shown in FIG. 4, FIG. 5A to FIG. 5C, FIG. 6A to FIG. 6C, FIG. 7A-1 to FIG. 7A-3, FIG. 7B-1 to FIG. 7B-3, FIG. 8A-1 to FIG. 8A-3, and FIG. 8B-1 to FIG. 8B-3 are merely used to assist in describing the technical solutions of embodiments of this application. In an actual service scenario, a type of an included terminal device is not only a mobile phone or a computer, but also may be a smart screen, an electronic conference whiteboard, a laptop computer, or the like. More terminal devices may participate a video conference, and displayed user interfaces may be different. Examples shown in FIG. 4, FIG. 5A to FIG. 5C, FIG. 6A to FIG. 6C, FIG. 7A-1 to FIG. 7A-3, FIG. 7B-1 to FIG. 7B-3, FIG. 8A-1 to FIG. 8A-3, and FIG. 8B-1 to FIG. 8B-3 sets no limitation on this application.

In scenarios of the video conferencing service that are shown in FIG. 4, FIG. 5A to FIG. 5C, FIG. 6A to FIG. 6C, FIG. 7A-1 to FIG. 7A-3, FIG. 7B-1 to FIG. 7B-3, FIG. 8A-1 to FIG. 8A-3, and FIG. 8B-1 to FIG. 8B-3, the computer A may quickly share screen interface content (for example, a conference material, a photo, and a video) to the mobile phone A and the mobile phone B for viewing. This step is simple, fast, and efficient. Software and hardware capabilities of different devices are integrated, to further improve office efficiency, and implement intelligent office scenario experience.

With reference to the foregoing embodiments, the following describes schematic diagrams of some user interfaces in embodiments shown in FIG. 9A-1 and FIG. 9A-2, FIG. 9B-1 and FIG. 9B-2, FIG. 10A-1 and FIG. 10A-2, and FIG. 10B-1 and FIG. 10B-2.

A mobile phone A and a computer A may perform device matching and establish a connection by using a short-range communication technology such as Bluetooth, Wi-Fi, and NFC, or may establish a connection by using a long-range communication technology. This is not limited in this application.

In examples of FIG. 9A-1 and FIG. 9A-2, FIG. 9B-1 and FIG. 9B-2, FIG. 10A-1 and FIG. 10A-2, and FIG. 10B-1 and FIG. 10B-2, the mobile phone A and the computer A establish a communication connection through Wi-Fi P2P.

If the mobile phone A and the computer A log in to a same system account or have been matched, the peer party is identified as a trusted device. After a connection invitation sent by a peer device is received, there are the following cases:
If the peer party is identified as a trusted device, the connection may be automatically allowed, without a cumbersome authentication process.

If the peer device is identified as an untrusted device, authentication needs to be performed to ensure device security. The untrusted device may be a device to which no communication connection is established or that logs in to a system account different from that of the device. An authentication manner may be a manner such as scanning a two-dimensional code, or entering a verification code.

In some embodiments, a user may control a screen sharing process by using an application "Huawei multi-screen collaboration" on the mobile phone A and the computer A.

After a connection is successfully established between the mobile phone A and the computer A, as shown in FIG. 9A-1 and FIG. 9A-2, after the mobile phone A detects, for example, a user operation of sliding downward from a top status bar, the mobile phone A displays a user interface 901 in response to the user operation. The user interface 901 may include the top status bar and a notification bar 902.

The top status bar may include a mobile signal indicator, a wireless network signal indicator, a power indicator, a time indicator, and the like. The notification bar 902 may display a notification item, a shortcut setting item, and the like of "Huawei multi-screen collaboration". For example, the notification bar 902 displays a case in which the mobile phone A is currently connected to the computer A. Certainly, a displayed name of a connected device may be customized.

The notification bar 902 may further display an "Enable screen sharing" option 903. After the user taps the "Enable screen sharing" option 903, the computer A starts screen recording, and sends a recorded audio/video stream to the mobile phone A. A local audio/video channel of the mobile phone A is switched to access the audio/video stream sent by the computer A.

As shown in FIG. 9A-1 and FIG. 9A-2, a user interface 904 of the computer A displays an interface 905 of the application "Huawei multi-screen collaboration". The interface 905 displays a case in which the computer A is currently connected to the mobile phone A, and further displays some function options such as an "Enable screen sharing" option 906, a "Select a to-be-shared file" option 907, and an "Add a comment box" option 908.

After the user taps the "Enable screen sharing" option 906, the computer A starts to record a screen and sends a recorded video stream to the mobile phone A.

The user may alternatively share a specified file. For example, if the user taps the "Select a to-be-shared file" option 907, and then selects a file A, the computer A records only an interface corresponding to the file A, and another application interface does not enter a recording interface. An "Add a comment box" function is to help the user comment content at any time during screen sharing. The recording interface includes comment content, and then sends a recorded audio/video stream to the mobile phone A. The mobile phone A may display the recording interface with the comment content.

If the user selects a to-be-shared file on the mobile phone A or the computer A, for example, a "Conference PPT" file, as shown in FIG. 9B-1 and FIG. 9B-2, a user interface 910 of the computer A displays a case in which the selected to-be-shared file "Conference PPT" is being recorded. A user interface 911 of the mobile phone A displays a notification bar 912, and the notification bar 912 displays an indication word 913 of "Displaying and controlling a screen of the computer A". The notification bar 912 may further include a "Pause screen sharing" option 914, to help the user operate a screen sharing pause instruction.

After the user performs a sliding operation to close the notification bar 912, for a display interface and a scenario, refer to FIG. 5A to FIG. 5C. The mobile phone A sends, to the mobile phone B, a screen recording media stream (including an audio stream, a video stream, and the like) received from the computer A, and a user interface 504 of the mobile phone B displays a screen recording video picture of the computer A.

In some embodiments, some options may be set on the mobile phone A, to help the user control the computer A on a side of the mobile phone A, and give a more diversified function to screen sharing. For an example interface, refer to FIG. 10A-1 and FIG. 10A-2 and FIG. 10B-1 and FIG. 10B-2.

As shown in FIG. 10A-1 and FIG. 10A-2, the computer A and the mobile phone A have established a connection, and are sharing a screen. The computer A records the interface 1001 that is being displayed, and sends the recorded media stream to the mobile phone A. A recording interface of the computer A is displayed in a main window 1002 of a display interface of the mobile phone A. The display interface of the mobile phone A may further include a floating window 1003 and a floating window 1004. The floating window 1003 may be used to display an image transmitted by a video call connection peer end, namely, the mobile phone B (not shown), and the floating window 1004 may be used to display an image that is of a user and that is captured by a camera of the mobile phone A.

The display interface of the mobile phone A may further include an option control 1005. When it is detected that the user taps the option control 1005, an option bar 1006 may be expanded in the display interface of the mobile phone A. As shown in FIG. 10B-1 and FIG. 10B-2, the option bar 1006 may include options such as "Select a to-be-shared file", "Add a comment box", "End screen sharing", "More function options", and "Help and feedback". The user may select an option, to implement a more diversified control function.

It should be noted that, service scenarios and user interfaces shown in FIG. 9A-1 and FIG. 9A-2, FIG. 9B-1 and FIG. 9B-2, FIG. 10A-1 and FIG. 10A-2, and FIG. 10B-1 and FIG. 10B-2 are merely examples, are used to assist in describing the technical solutions of embodiments of this application, and constitute no limitation on this application. In an actual service scenario, there may be different displayed user interfaces.

With reference to the embodiments shown in FIG. 2 to FIG. 10B-1 and FIG. 10B-2, the following describes a screen sharing method provided in embodiments of this application.

In embodiments, a communication system including a first terminal, a second terminal, and a third terminal is used as an example for description. A type of each terminal is not limited in this embodiment of this application, and may be a mobile phone, a PC, a smart screen, or the like. In some examples, the first terminal may be the foregoing mobile phone A, the second terminal may be the foregoing computer A, and the third terminal may be the foregoing mobile phone B. It can be understood that, the method provided in embodiments is merely an example, and constitutes no limitation on another embodiment of this application. In an actual service scenario, more or fewer terminal devices may be included.

### Embodiment 1

FIG. 11 is a flowchart of a screen sharing method according to Embodiment 1 of this application. In Embodiment 1, a first terminal establishes a second connection to a third terminal, and then the first terminal establishes a first connection to a second terminal. Specifically, the following steps are included:
S101: The first terminal establishes the second connection to the third terminal.

In some embodiments, the second connection established between the first terminal and the third terminal may be a video call connection, or may be a video conference connection. This is not limited in this embodiment of this application. The second connection may be a communication connection for transferring data through the Internet or a local area network based on a video call application platform such as a chatting app (for example, MeeTime, WeChat, DingTalk, or WeCom) or a conference app (for example, ZOOM, welink, or cloudlink).

The first terminal or the third terminal may initiate and establish the second connection to a peer end in response to a received user operation, for example, a user operation of initiating a video call connection, or a user operation of receiving a video call invitation.

S102: The first terminal plays a third media stream received from the third terminal, where the third media stream includes a picture captured by a camera of the third terminal.

S103: The third terminal plays a fourth media stream received from the first terminal, where the fourth media stream includes a picture captured by a camera of the first terminal.

After the first terminal establishes the second connection to the third terminal, the first terminal and the third terminal may send a data stream to each other. The data stream is a set of data sequences that arrive sequentially, massively, fast, and continuously. Usually, the data stream may be considered as a dynamic data set that infinitely increases over time.

The data stream in this embodiment is a media stream, the media stream includes an audio stream, a video stream, and the like, and the video stream is a plurality of pieces of video data, and includes an image stream including frames of images. Usually, an audio stream, that is, audio data corresponding to a video picture, is transmitted together with the video stream.

In this embodiment, the first terminal sends the fourth media stream to the third terminal. The fourth media stream is a data stream generated by encoding a plurality of pictures and corresponding sounds that are captured by the camera and a microphone of the first terminal. After the fourth media stream is received, decoding is performed, and the third terminal plays audio and a video that correspond to the fourth media stream received from the first terminal, displays a corresponding video picture, and plays corresponding audio.

In addition, the third terminal sends the third media stream to the first terminal. The third media stream is a data stream generated by encoding a plurality of pictures and corresponding sounds that are captured by the camera and a microphone of the third terminal. After the third media stream is received, decoding is performed, and the first terminal plays audio and a video that correspond to the third media stream received from the third terminal, displays a corresponding video picture, and plays corresponding audio.

In some embodiments, a display interface of the first terminal or the third terminal includes a plurality of windows.

As shown in FIG. 4, a video call display interface of the first terminal or the third terminal may include a main window and a floating window. The main window may be used to display a video picture sent by a peer device, and the floating window may be used to display a video picture captured by a local camera. For example, a first user interface of the first terminal may include a main window and a floating window. The main window displays a video picture that corresponds to the third media stream and that is sent by the third terminal, and the floating window displays a video picture that corresponds to the fourth media stream and that is captured by the camera of the first terminal. Similarly, a second user interface of the third terminal may also include a main window and a floating window. The main window displays a video picture that corresponds to the fourth media stream and that is sent by the first terminal, and the floating window displays a video picture that corresponds to the third media stream and that is captured by the camera of the third terminal.

In some embodiments, the first user interface of the first terminal includes a first window and a second window, the first window is a main window, the second window is a floating window, the second user interface of the third terminal includes a third window and a fourth window, the third window is a main window, and the fourth window is a floating window.

In an example, as shown in FIG. 4, after the first terminal establishes the second connection to the third terminal, a picture displayed in the first window is a picture captured by the camera of the third terminal, a picture displayed in the second window is a picture captured by the camera of the first terminal, a picture displayed in the third window is a picture captured by the camera of the first terminal, and a picture displayed in the fourth window is a picture captured by the camera of the third terminal.

S104: The first terminal establishes the first connection to the second terminal, and negotiates a screen sharing parameter.

In this embodiment of this application, the first connection established between the first terminal and the second terminal may be a wired connection or a wireless connection. In an implementation, the first terminal may establish a communication connection to the second terminal based on Wi-Fi near field networking communication, for example, a Wi-Fi P2P connection.

In some embodiments, the first terminal may find the second terminal, and then send a second connection establishment request to the second terminal. After receiving feedback information that is sent by a second terminal selected by a user and that indicates that establishment of the communication connection is allowed, the first terminal successfully establishes the second connection to the second terminal.

Certainly, a sender of the second connection establishment request may also be the second terminal. After receiving a connection establishment invitation sent by the second terminal, the first terminal sends, to the second terminal, a feedback indicating that establishment of the communication connection is allowed, and then the first terminal successfully establishes the second connection to the second terminal. The examples herein constitute no limitation on other embodiments. When the first terminal establishes the communication connection to the second terminal, there are but not limited to the following two cases:
(1) The second terminal is a trusted device.

When the second terminal is a trusted device for the first terminal, after receiving a communication connection establishment request sent by the first terminal, the second terminal may directly send, to the first terminal, feedback information indicating that establishment of the communication connection is allowed, to complete establishment of the communication connection. In this way, an operation of the user can be simplified, and control of the second terminal or the first terminal by the user is facilitated.

(2) The second terminal is an untrusted device.

When the second terminal is an untrusted device, and the first terminal sends the communication connection establishment request to the second terminal, the first terminal and the second terminal enter an authentication process, and the first terminal verifies account information of the second terminal. When the first terminal and the second terminal complete the authentication process, establishment of the communication connection is completed. In this way, security of communication between devices can be ensured.

In some embodiments, authentication between the first terminal and the second terminal may be code (for example, a two-dimensional code or a barcode) scanning verification.

In some other embodiments, authentication between the first terminal and the second terminal may alternatively be PIN code verification. Specifically, when the first terminal initiates the communication connection establishment request to the second terminal, the second terminal displays, in a user interface of the second terminal, a PIN code used for authentication. The first terminal may provide an input interface used for entering the PIN code. When the user enters, on the first terminal, the PIN code displayed by the second terminal, the authentication process between the first terminal and the second terminal may be completed.

It can be learned that, an operation that the user establishes the communication connection may be optimized by setting the trusted device. For a device that has not established a communication connection to the first terminal, the communication connection needs to be established through authentication. When the user reselects a device that once establishes a communication connection, the user may not need to perform authentication again; or when the user selects another electronic device that has a same account as the first terminal to be connected to the first terminal, an authentication process may be omitted. In this way, an operation is simplified, and communication security of the device is ensured.

It can be understood that, in another embodiment of this application, the trusted device or the untrusted device may not be distinguished. All devices found by the first terminal may be processed in a connection manner of the trusted device, or all devices may be processed in a connection manner of the untrusted device.

This is not limited to the foregoing manners. The first terminal and the second terminal may alternatively establish the communication connection in another manner. For example, verification is performed by entering a verification code, and a "Tap" operation based on an NFC technology is performed. This is not limited in this embodiment of this application.

After establishing the first connection, the first terminal and the second terminal may negotiate the screen sharing parameter, including but not limited to a screen recording, a bitrate of a sound recording module, a recording format, a cache path, a bitrate, a frame rate, a resolution of a screen recording, a source of a sound recording (audio corresponding to a media file or audio collected by a microphone), an audio/video encoding/decoding manner, a screen recording area, a specified recording file, a video window rotation policy (a direction of a recorded video is a vertical direction or a horizontal direction), a size of a video recording window, a policy of filling a black border for an area that does fills a screen, or the like. This is not limited in this embodiment.

For example, a resolution of a video stream recorded and transmitted by the second terminal may be negotiated. Affected by a rate of a transmission channel, to ensure that interface display is smooth during screen sharing, the first terminal and the second terminal may negotiate a resolution of a recorded video stream based on a transmission speed of a current connection. Alternatively, because a screen of a mobile phone is small and a resolution does not need to be particularly high, when a computer serves as the second terminal to record a video stream, while it is ensured that display is smooth and a specific definition is ensured, the resolution of the recorded video stream may be properly reduced, sharing efficiency may be improved, and a bandwidth can be saved. After the first terminal establishes the first connection to the second terminal, the first terminal or the second terminal may initiate a screen recording start instruction. Step S105A is that the first terminal initiates the screen recording start instruction, and step S105B is that the second terminal initiates the screen recording start instruction. Therefore, the screen recording start instruction may be initiated in any manner in step S105A or step S105B.

S105A: In response to a first user operation, the first terminal sends the screen recording start instruction to the second terminal.

In an example, as shown in FIG. 9A-1 and FIG. 9A-2, after the user taps an "Enable screen sharing" option 903 in an interface of a mobile phone A, the first terminal sends the screen recording start instruction to the second terminal in response to a first user operation of tapping the "Enable screen sharing" option 903.

S105B: In response to a second user operation, the second terminal detects the screen recording start instruction.

In an example, as shown in FIG. 9A-1 and FIG. 9A-2, the user may operate a mouse pointer to tap an "Enable screen sharing" option 906, and in response to a second user operation of tapping the "Enable screen sharing" option 906, the second terminal detects the screen recording start instruction.

S106: The second terminal records a screen picture, and generates a first media stream.

After the screen sharing parameter is negotiated, the second terminal may start screen recording in response to the screen recording start instruction in step S105A or step S 105B, and generate the first media stream.

The first media stream may include a display picture of a screen of the second terminal, and audio collected by a microphone of the second terminal or a sound corresponding to a media file played by the second terminal.

In some embodiments, after the first connection is established between the first terminal and the second terminal, the screen picture may automatically start to be recorded, and the user does not need to send the screen recording start instruction.

A picture recorded by the second terminal may be a full-screen interface of the second terminal. Alternatively, the user may specify recording content, to protect privacy. For example, the user may specify a screen area, or the user may specify one or more documents or pictures.

In some embodiments, the second terminal may further enable a local camera, to combine a picture captured by the local camera and a screen recording picture, to generate a first media stream and send the first media stream to the first terminal together. In this way, not only screen recording content can be viewed, but also a picture captured by the camera of the second terminal, for example, an image of a user who uses the second terminal can be viewed.

In some embodiments, the second terminal may further combine a real-time comment of the user on the second terminal and the screen recording picture, to generate a first media stream and send the first media stream to the first terminal, so as to improve screen sharing efficiency.

S 107: The second terminal sends the first media stream to the first terminal.

The second terminal sends the first media stream to the first terminal through the first connection. S 108: The first terminal generates a second media stream based on the obtained first media stream. In some embodiments, after obtaining the first media stream (including an audio data stream and a video data stream) from the second terminal, the first terminal forwards the first media stream to the third terminal. In other words, the second media stream is equal to the first media stream.

In some embodiments, after obtaining the first media stream from the second terminal, the first terminal may perform new editing on the first media stream, to generate the second media stream and send the second media stream to the third terminal.

For example, the first terminal may package a first media stream of a screen recording of the second terminal and an image that is of the user and that is captured by the camera of the first terminal, to generate the second media stream, and send the second media stream to the third terminal. As shown in FIG. 7A-1 to FIG. 7A-3, a mobile phone B not only can view a conference material picture shared by the computer A, but also can view an image that is of the user and that is captured by a camera of the mobile phone A.

For another example, the first terminal may perform an operation such as scrawling and commenting on a recorded screen picture corresponding to the first media stream, and then generate a second media stream. A video picture in the second media stream has an editing trace such as scrawling and commenting. The first terminal sends the second media stream to the third terminal, and the video picture corresponding to the second media stream displayed by the third terminal displays a picture with an editing trace. As shown in FIG. 8A-1 to FIG. 8A-3, the mobile phone B not only can view a conference material shared by the computer A, but also can view a newly generated scrawling and commenting trace on the mobile phone A.

In some embodiments, audio data transmitted by the second terminal, for example, a sound collected by the microphone of the second terminal or audio corresponding to the media file played by the second terminal, may be selected as audio data of the second media stream.

In other embodiments, audio data of the second media stream, for example, a voice that is of the user and that is collected by the microphone of the first terminal or an audio corresponding to a media file on the first terminal, may be selected from the first terminal.

S109: The first terminal sends a second media stream to the third terminal.

The first terminal sends the second media stream to the third terminal by using a video call app.

Specifically, the first terminal may enable audio and image data of the second media stream to use a transmission channel that is of the local camera and the microphone and that used to transmit audio and a video, and then transmit the second media stream to upper-layer video call software. An upper-layer video call application does not perceive a case in which a video stream changes. The first terminal can send, to the third terminal, a screen picture captured by the second terminal, without a need to modify a system interface invoked by a third-party application, in other words, without a need to adaptively modify the third-party application.

S110: The first terminal plays the third media stream received from the third terminal, where the third media stream includes the picture captured by the camera of the third terminal.

S111: The third terminal plays the second media stream received from the first terminal, where the second media stream includes the screen picture captured by the second terminal through screen recording.

After the foregoing steps, the picture displayed by the third terminal includes the screen picture captured by the second terminal through screen recording.

In some embodiments, the display interface of the first terminal or the third terminal includes a plurality of windows.

As shown in FIG. 5A to FIG. 5C, the video call display interface of the first terminal or the third terminal may include the main window and the floating window. The main window may be used to display the video picture sent by the peer device, and the floating window may be used to display the video picture captured by the local camera. For example, the second user interface of the first terminal may include a main window and a floating window. The main window displays a video picture corresponding to the third media stream sent by the third terminal, and the floating window displays a screen recording picture from the second terminal. Similarly, a fourth user interface of the third terminal may also include a main window and a floating window. The main window displays the video picture corresponding to the second media stream sent by the first terminal, including the screen recording picture of the second terminal, and the floating window displays the video picture corresponding to the third media stream collected by the local camera of the third terminal.

In some other embodiments, the third terminal not only displays the screen recording picture from the second terminal, but also displays an image that is of the user and that is captured by the camera of the first terminal. As shown in FIG. 7A-1 to FIG. 7A-3, a user interface of the mobile phone B displays a conference material recording picture of the computer A, and a floating window 706 further displays an image of the user A of the mobile phone A.

In some other embodiments, the third terminal not only displays the screen recording picture of the second terminal, but also may display an editing trace such as a scrawling and commenting trace made by the first terminal. As shown in FIG. 8A-1 to FIG. 8A-3, a user interface of the mobile phone B not only displays a conference material recording picture of the computer A, but also synchronously displays a check mark 805 made by the user on a side of the mobile phone A.

In an example, as shown in FIG. 5A to FIG. 5C, after the first terminal sends the second media stream to the third terminal through the second connection, the picture displayed in the first window is the picture captured by the camera of the third terminal, the picture displayed in the second window is the screen picture recorded by the second terminal, the picture displayed in the third window is the screen picture recorded by the second terminal, and the picture displayed in the fourth window is the picture captured by the camera of the third terminal.

In an example, as shown in FIG. 6A to FIG. 6C, after the first terminal sends the second media stream to the third terminal through the second connection, the picture displayed in the first window is the screen picture recorded by the second terminal, the picture displayed in the second window is the picture captured by the camera of the third terminal, the picture displayed in the third window is the screen picture recorded by the second terminal, and the picture displayed in the fourth window is the picture captured by the camera of the third terminal.

In an example, as shown in FIG. 7A-1 to FIG. 7A-3, the first user interface of the first terminal further includes a fifth window, the second user interface of the third terminal further includes a sixth window, and the fifth window and the sixth window are floating windows. A picture displayed in the fifth window is the picture captured by the camera of the first terminal, and a picture displayed in the sixth window is the picture captured by the camera of the first terminal.

### Embodiment 2

FIG. 12 is a flowchart of a screen sharing method according to Embodiment 2 of this application. In Embodiment 2, a first terminal establishes a first connection to a second terminal, and then the first terminal establishes a second connection to a third terminal. In other words, the first terminal establishes a screen sharing connection to the second terminal, and then establishes a video call connection to the third terminal. In this way, an interface of the third terminal may directly receive, from the first terminal for display, a picture captured by the second terminal through screen recording. A camera of the first terminal does not need to be enabled, to further improve screen sharing efficiency.

Specifically, the following steps are included:
S201: The first terminal establishes the first connection to the second terminal, and negotiates a screen sharing parameter.

In this embodiment of this application, the first connection established between the first terminal and the second terminal may be a wired connection or a wireless connection. In an implementation, the first terminal may establish a communication connection to the second terminal based on Wi-Fi near field networking communication, for example, a Wi-Fi P2P connection.

For more descriptions, refer to step S104. Details are not described herein again.

After establishing the first connection, the first terminal and the second terminal may negotiate the screen sharing parameter, including but not limited to a screen recording, a bitrate of a sound recording module, a recording format, a cache path, a bitrate, a frame rate, a resolution of a screen recording, a source of a sound recording (audio corresponding to a media file or audio collected by a microphone), an audio/video encoding/decoding manner, a screen recording area, a specified recording file, a video window rotation policy (a direction of a recorded video is a vertical direction or a horizontal direction), a size of a video recording window, a policy of filling a black border for an area that does fills a screen, or the like. This is not limited in this embodiment.

For example, a resolution of a video stream recorded and transmitted by the second terminal may be negotiated. Affected by a rate of a transmission channel, to ensure that interface display is smooth during screen sharing, the first terminal and the second terminal may negotiate a resolution of a recorded video stream based on a transmission speed of a current connection. Alternatively, because a screen of a mobile phone is small and a resolution does not need to be particularly high, when a computer serves as the second terminal to record a video stream, while it is ensured that display is smooth and a specific definition is ensured, the resolution of the recorded video stream may be properly reduced, sharing efficiency may be improved, and a bandwidth can be saved. After the first terminal establishes the first connection to the second terminal, the first terminal or the second terminal may initiate a screen recording start instruction. Step S202A is that the first terminal initiates the screen recording start instruction, and step S202B is that the second terminal initiates the screen recording start instruction. Therefore, the screen recording start instruction may be initiated in any manner in step S202A or step S202B.

S202A: In response to a first user operation, the first terminal sends the screen recording start instruction to the second terminal.

In an example, as shown in FIG. 9A-1 and FIG. 9A-2, after the user taps an "Enable screen sharing" option 903 in an interface of a mobile phone A, the first terminal sends the screen recording start instruction to the second terminal in response to the first user operation of tapping the "Enable screen sharing" option 903.

S202B: In response to a second user operation, the second terminal detects the screen recording start instruction.

In an example, as shown in FIG. 9A-1 and FIG. 9A-2, the user may operate a mouse pointer to tap an "Enable screen sharing" option 906, and in response to the second user operation of tapping the "Enable screen sharing" option 906, the second terminal detects the screen recording start instruction.

S203: The second terminal records a screen picture, and generates a first media stream.

After the screen sharing parameter is negotiated, the second terminal may start screen recording in response to the screen recording start instruction in step S202A or step S202B, and generate the first media stream.

The first media stream may include a display picture of a screen of the second terminal, and audio collected by a microphone of the second terminal or a sound corresponding to a media file played by the second terminal.

In some embodiments, after the first connection is established between the first terminal and the second terminal, the screen picture may automatically start to be recorded, and the user does not need to send the screen recording start instruction.

A picture recorded by the second terminal may be a full-screen interface of the second terminal. Alternatively, the user may specify recording content, to protect privacy. For example, the user may specify a screen area, or the user may specify one or more documents or pictures.

In some embodiments, the second terminal may further enable a local camera, to combine a picture captured by the local camera and a screen recording picture, to generate a first media stream and send the first media stream to the first terminal together. In this way, not only screen recording content can be viewed, but also a picture captured by the camera of the second terminal, for example, an image of a user who uses the second terminal can be viewed.

In some embodiments, the second terminal may further combine a real-time comment of the user on the second terminal and the screen recording picture, to generate a first media stream and send the first media stream to the first terminal, so as to improve screen sharing efficiency.

S204: The second terminal sends the first media stream to the first terminal.

The second terminal sends the first media stream to the first terminal through the first connection. S205: The first terminal establishes the second connection to the third terminal.

In some embodiments, the second connection established between the first terminal and the third terminal may be a video call connection, or may be a video conference connection. This is not limited in this embodiment of this application. The second connection may be a communication connection for transferring data through the Internet or a local area network based on a video call application platform such as a chatting app (for example, MeeTime, WeChat, DingTalk, or WeCom) or a conference app (for example, ZOOM, welink, or cloudlink).

The first terminal or the third terminal may initiate and establish the second connection to a peer end in response to a received user operation, for example, a user operation of initiating a video call connection, or a user operation of receiving a video call invitation.

S206: The first terminal generates a second media stream based on the obtained first media stream. In some embodiments, after obtaining the first media stream from the second terminal, the first terminal forwards the first media stream to the third terminal. In other words, the second media stream is equal to the first media stream.

In some embodiments, after obtaining the first media stream from the second terminal, the first terminal may perform new editing on the first media stream, to generate the second media stream and send the second media stream to the third terminal.

For example, the first terminal may package a first media stream of a screen recording of the second terminal and an image that is of the user and that is captured by the camera of the first terminal, to generate the second media stream, and send the second media stream to the third terminal. As shown in FIG. 7A-1 to FIG. 7A-3, a mobile phone B not only can view a conference material picture shared by the computer A, but also can view an image that is of the user and that is captured by a camera of the mobile phone A.

For another example, the first terminal may perform an operation such as scrawling and commenting on a screen recording picture corresponding to the first media stream, and then generate a second media stream. A video picture in the second media stream has an editing trace such as scrawling and commenting. The first terminal sends the second media stream to the third terminal, and the video picture corresponding to the second media stream displayed by the third terminal displays a picture with an editing trace. As shown in FIG. 8A-1 to FIG. 8A-3, the mobile phone B not only can view a conference material shared by the computer A, but also can view a newly generated scrawling and commenting trace on the mobile phone A.

S207: The first terminal sends a second media stream to the third terminal.

The first terminal sends the second media stream to the third terminal by using a video call app.

Specifically, the first terminal may enable audio and image data of the second media stream to use a transmission channel that is of the local camera and the microphone and that used to transmit audio and a video, and then transmit the second media stream to upper-layer video call software. An upper-layer video call application does not perceive a case in which a video stream changes. The first terminal can send, to the third terminal, a screen picture captured by the second terminal, without a need to modify a system interface invoked by a third-party application, in other words, without a need to adaptively modify the third-party application.

S208: The first terminal plays the third media stream received from the third terminal, where the third media stream includes the picture captured by the camera of the third terminal.

S209: The third terminal plays the second media stream received from the first terminal, where the second media stream includes the screen picture captured by the second terminal through screen recording.

After the foregoing steps, the picture displayed by the third terminal includes the screen picture captured by the second terminal through screen recording.

In some embodiments, the display interface of the first terminal or the third terminal includes a plurality of windows.

As shown in FIG. 5A to FIG. 5C, the video call display interface of the first terminal or the third terminal may include the main window and the floating window. The main window may be used to display the video picture sent by the peer device, and the floating window may be used to display the video picture captured by the local camera. For example, the second user interface of the first terminal may include a main window and a floating window. The main window displays a video picture corresponding to the third media stream sent by the third terminal, and the floating window displays a screen recording picture from the second terminal. Similarly, a fourth user interface of the third terminal may also include a main window and a floating window. The main window displays the video picture corresponding to the second media stream sent by the first terminal, including the screen recording picture of the second terminal, and the floating window displays the video picture corresponding to the third media stream collected by the local camera of the third terminal.

In some other embodiments, the third terminal not only displays the screen recording picture from the second terminal, but also displays an image that is of the user and that is captured by the camera of the first terminal. As shown in FIG. 7A-1 to FIG. 7A-3, a user interface of the mobile phone B displays a conference material recording picture of the computer A, and a floating window 706 further displays an image of the user A of the mobile phone A.

In some other embodiments, the third terminal not only displays the screen recording picture of the second terminal, but also may display an editing trace such as a scrawling and commenting trace made by the first terminal. As shown in FIG. 8A-1 to FIG. 8A-3, a user interface of the mobile phone B not only displays a conference material recording picture of the computer A, but also synchronously displays a check mark 805 made by the user on a side of the mobile phone A.

In some embodiments, the first user interface of the first terminal includes a first window and a second window, the first window is a main window, the second window is a floating window, the second user interface of the third terminal includes a third window and a fourth window, the third window is a main window, and the fourth window is a floating window.

In an example, as shown in FIG. 5A to FIG. 5C, after the first terminal sends the second media stream to the third terminal through the second connection, the picture displayed in the first window is the picture captured by the camera of the third terminal, the picture displayed in the second window is the screen picture recorded by the second terminal, the picture displayed in the third window is the screen picture recorded by the second terminal, and the picture displayed in the fourth window is the picture captured by the camera of the third terminal.

In an example, as shown in FIG. 6A to FIG. 6C, after the first terminal sends the second media stream to the third terminal through the second connection, the picture displayed in the first window is the screen picture recorded by the second terminal, the picture displayed in the second window is the picture captured by the camera of the third terminal, the picture displayed in the third window is the screen picture recorded by the second terminal, and the picture displayed in the fourth window is the picture captured by the camera of the third terminal.

In an example, as shown in FIG. 7A-1 to FIG. 7A-3, the first user interface of the first terminal further includes a fifth window, the second user interface of the third terminal further includes a sixth window, and the fifth window and the sixth window are floating windows. A picture displayed in the fifth window is the picture captured by the camera of the first terminal, and a picture displayed in the sixth window is the picture captured by the camera of the first terminal. According to the method provided in this embodiment, the second terminal can quickly share screen interface content (for example, a conference material, a photo, and a video) with the first terminal and the third terminal without a need to install video call software. This step is simple, fast, and efficient, and communication efficiency and user communication experience are further improved.

With reference to the foregoing embodiments, the following describes a virtual apparatus architecture of a communication system 80 according to an embodiment of this application.

FIG. 13 is a schematic diagram of a software module of a communication system 80 according to an embodiment of this application. The communication system 80 includes a first terminal and a second terminal. A device type and an operating system of the first terminal and the second terminal are not limited in this embodiment. A software system of the first terminal or the second terminal includes but is not limited to Harmony^{®}, iOS^{®}, Android^{®}, Windows^{®}, Linux^{®}, or another operating system.

As shown in FIG. 13, the first terminal establishes a first connection to the second terminal. The first terminal may include a communication module 810, a video call application 811, a display module 812, an audio/video switching module 813, a policy management module 814, a camera management module 815, a microphone management module 816, and the like. The second terminal may include a display module 801, a communication module 802, a screen recording module 803, a sound recording module 804, a policy management module 805, and the like. Modules of a same terminal may communicate through an application programming interface (application programming interface, API).

On a side of the first terminal, the communication module 810 is responsible for receiving an audio/video stream sent by the second terminal.

The video call application 811 is configured to establish a video call connection to another terminal device. As an upper-layer application, the video call application 811 simply invokes a local microphone and a camera, and does not perceive a case in which a lower-layer audio/video stream is replaced with a screen recording of the second terminal.

The display module 812 is responsible for displaying an image.

The audio/video switching module is configured to separately inject received audio/video content into a camera channel and a microphone channel of the first terminal.

The policy management module 814 is responsible for negotiating a screen sharing parameter with the second terminal, for example, information such as an audio/video bitrate, a video resolution, a screen sharing area, and a video window rotation policy.

The camera management module 815 and the microphone management module 816 are responsible for decoding the audio/video stream sent by the second terminal, and then delivering the audio/video stream to the video call application 811.

On a side of the second terminal, the display module 801 is responsible for displaying an image. The communication module 802 is responsible for transmitting recorded screen content to the first terminal.

The screen recording module 803 is responsible for recording screen content.

The sound recording module 804 is responsible for recording output audio of a screen or input audio of a microphone.

The policy management module 805 is responsible for managing all policy parameters such as a screen recording, a bitrate of the sound recording module, a screen resolution, a sound recording source (screen audio or audio collected by the microphone), an audio/video encoding/decoding manner, a screen recording area or a specified recording file, and a video window rotation policy. According to the shown embodiment of the communication system 80, the second terminal may quickly share screen interface content with the first terminal and the third terminal. This step is simple, fast, and efficient, to further improve office efficiency. For example, the first terminal and the second terminal may be supported to be in a multi-screen collaboration function, so that the second terminal shares the screen interface content with a video call application on the first terminal, and when the third terminal has a video call with the first terminal, the third terminal may view, by using the video call application, the interface content shared by the second terminal. Display content of a media stream (including an audio stream and a video stream) sent by the first terminal to the third terminal includes but is not limited to the following three cases:
1. The display content is edited by the first terminal.

After the first terminal receives a video stream captured by the second terminal, a user may perform some control operations on a first terminal side, to edit, set, or adjust the video stream, generate a new video stream, and send the new video stream to the third terminal.

For example, the user may make some comments in a video picture of the first terminal. The comments and the original video picture are combined into a new video picture and sent to the third terminal. For another example, the user may set that a video picture sent by the first terminal to the third terminal not only includes a screen recording picture of the second terminal, but also includes a portrait that is of the user and that is captured by a camera of the first terminal. In this way, a third terminal side not only displays the screen recording picture from the second terminal, but also displays the portrait of the user of the first terminal. Therefore, the user has better video call experience. In addition, a picture parameter may be further adjusted in a video call screen of the first terminal. The picture parameter may include one or more of the following: an image cropping size, a color temperature of an image, a beauty/bodybuilding type, a filter type, a sticker option, and the like.

Therefore, the first terminal may adjust, based on an editing capability of the first terminal, an image captured by the second terminal, to generate a new display picture and send the new display picture to the third terminal. This brings use convenience to the user of the first terminal. 2. The display content is edited by the second terminal.

After the second terminal generates a screen recording picture, a user may perform some control operations on a second terminal side, to edit, set, or adjust the video stream, generate a new video stream, and send the new video stream to the first terminal.

For example, the user may make some comments on the screen recording picture of the second terminal. The comments and the original screen recording picture are combined into a new video picture and sent to the first terminal. The first terminal sends the new video picture to the third terminal. For another example, the user may set that a video picture sent by the second terminal to the first terminal not only includes a screen recording picture of the second terminal, but also includes a portrait that is of the user and that is captured by a camera of the second terminal. In this way, a first terminal side and a third terminal side not only display the screen recording picture from the second terminal, but also display the portrait of the user of the second terminal. Therefore, the user has better video call experience. In addition, a picture parameter may be further adjusted in a user interface of the second terminal. The picture parameter may include one or more of the following: an image cropping size, a color temperature of an image, a beauty/bodybuilding type, a filter type, a sticker option, and the like.

Therefore, the second terminal may adjust, based on an editing capability of the second terminal, an image captured by the second terminal, to generate a new display picture and send the new display picture to the first terminal. This brings use convenience to the user of the second terminal.

3. The display content is collaboratively edited by the first terminal and the second terminal. With reference to the descriptions of the foregoing two aspects, in an implementation, the first terminal and the second terminal each may have a video picture editing function. In this way, the first terminal and the second terminal may collaboratively complete editing of the video picture, to be close to display effect that the user wants to achieve as much as possible. This brings convenience to users of both the first terminal and the second terminal, and avoids a case in which editing display effect cannot satisfy both users when the first terminal or the second terminal separately edits a display picture.

For example, after the second terminal edits a screen recording picture, the first terminal may edit the edited picture again. After the first terminal or the second terminal edits a screen recording picture, a display picture is synchronized to display interfaces of the first terminal and the second terminal.

Further, after the first terminal sends a display effect adjustment instruction to the second terminal, the second terminal may further perform compatibility processing on the instruction, so that the second terminal can effectively complete adjustment of corresponding display effect in response to the processed instruction. Because the first terminal and the second terminal may have different device types and device models, in response to a user operation that the user adjusts the display effect, the first terminal may generate some instructions that are not supported or cannot be identified by the second terminal, and the second terminal may not directly adjust the interface display effect in response to these instructions. The second terminal performs compatibility processing on the instruction, so that the second terminal can respond to an operation performed by the user on the first terminal, and the first terminal can control the second terminal to adjust the interface display effect.

It may be learned from the foregoing situation that, in addition to a case in which the second terminal may have a capability of editing a screen recording picture or another video stream, for a screen recording picture or another video stream from the second terminal, the first terminal may have a capability of editing the screen recording picture or the another video stream. This enhances effect of controlling the display interface of the second terminal by the first terminal, and improves use experience of the user.

In this embodiment of this application, that the first terminal displays an image of the second terminal may be that the first terminal transmits an image from the second terminal through a data stream channel collected by the camera of the first terminal. In other words, the first terminal originally transmits, through the data stream channel, data of an image captured by the camera of the first terminal. However, in a scenario of this embodiment of this application, the data stream channel is used to transmit a screen recording data stream or another video stream from the second terminal. Therefore, an upper-layer application of the first terminal does not need to perceive whether a displayed image comes from the first terminal or the second terminal. The video stream captured by the second terminal is equivalent to a video stream captured by a remote camera of the first terminal. The first terminal can send the obtained image of the second terminal to the upper-layer application, without a need to modify a manner in which a third-party application invokes a system interface, in other words, without requiring a third-party application to adapt, to expand a use scenario of screen sharing between the first terminal and the second terminal.

The foregoing descriptions of the virtual apparatus architecture of the communication system 80 are merely an example. It can be understood that a software architecture shown in embodiments of the present invention does not constitute a specific limitation on this application. In some other embodiments of this application, a software architecture of the communication system 80 may include more or fewer modules than shown in the figure, or combine some modules, or split some modules, or have different architecture arrangements. The components shown in the figure may be implemented by hardware, software, or a combination of software and hardware.

With reference to a schematic diagram of the software module of the communication system 80 shown in FIG. 13, the following describes a procedure of an embodiment from a perspective of a module function.

FIG. 14A to FIG. 14C show steps of a screen sharing procedure.

S301: A user initiates a video call in a video call application of a first terminal.

The video call application is not limited in this embodiment. The video call application may be a social application with a video chatting function, for example, WeChat, QQ, MeeTime, or DingTalk, or may be a video conference application, for example, ZOOM, welink, or cloudlink. S302: The video call application invokes a local camera of the first terminal.

S303: The video call application invokes a local microphone of the first terminal.

When a user uses the video call application to make a video call, the video call application may invoke the local camera and the microphone to collect audio and image data, and send the audio and image data to a peer end of the video call.

S304: The user initiates a screen sharing function on the first terminal.

As shown in the embodiment shown in FIG. 9A-1 and FIG. 9A-2, the user may select an "Enable screen sharing" option 903 after the first terminal establishes a connection to the second terminal, and then the first terminal sends a screen recording start instruction to the second terminal.

The screen sharing function may enable the first terminal to obtain a screen picture of the second terminal, and then the first terminal displays the screen picture of the second terminal. After obtaining the screen picture of the second terminal, the first terminal may send the screen picture of the second terminal to a third terminal, and then the third terminal may display the screen picture of the second terminal. In some embodiments, the first terminal may implement control of a screen of the second terminal.

S305: An audio/video switching module and a policy management module of the first terminal negotiate a screen sharing parameter.

After the audio/video switching module receives a screen sharing start instruction initiated by the user, the audio/video switching module of the first terminal may negotiate the screen sharing parameter with the policy management module, including but not limited to a screen recording, a bitrate of a sound recording module, a resolution of a screen recording, a source of a sound recording (screen audio or audio collected by a microphone), an audio/video encoding/decoding manner, a screen recording area or a specified recording file, a video window rotation policy (a direction of a recorded video is a vertical direction or a horizontal direction), a size of a video recording window, filling a black border for an area that does fills a screen, or the like.

S306: The policy management module of the first terminal delivers a screen sharing audio/video parameter to a policy management module of the second terminal.

S307: The policy management module of the second terminal delivers a screen recording instruction to a screen recording module.

S308: The policy management module of the second terminal delivers an audio recording instruction to a sound recording module.

The policy management module of the second terminal delivers an audio/video stream recording instruction to the screen recording module and the sound recording module based on the negotiated screen sharing audio/video parameter.

S309: The screen recording module of the second terminal uploads a screen recording video stream to the policy management module.

S310: The sound recording module of the second terminal uploads a screen recording audio stream to the policy management module.

S311: The policy management module of the second terminal encodes and combines a screen recording audio-video stream.

After receiving the screen recording video stream and the screen recording audio stream, the policy management module of the second terminal combines and integrates the screen recording video stream and the screen recording audio stream, to generate the screen recording audio-video stream. For example, the second terminal may combine a screen recording video picture and an image captured by a camera of the second terminal into one picture, and integrate the video picture and the image into one audio-video stream.

S312: The policy management module of the second terminal sends the screen recording audio-video stream to a communication module.

S313: The communication module of the second terminal sends the screen recording audio-video stream to a communication module of the first terminal.

S314: The communication module of the first terminal reports the screen recording audio-video stream to the audio/video switching module.

S315: The audio/video switching module of the first terminal delivers an audio switching instruction to the microphone.

S316: The audio/video switching module of the first terminal delivers a video switching instruction to the camera.

The audio/video switching module may separately inject received audio/video content into a camera channel and a microphone channel of the first terminal, and replace, with the audio-video stream received from the second terminal, the audio-video stream captured by the local camera and the microphone of the first terminal.

S317: A microphone management module of the first terminal uploads the audio stream to the video call application.

S318: A camera management module of the first terminal uploads the video stream to the video call application.

As an upper-layer application, the video call application simply invokes the local microphone and the camera, and does not perceive a case in which a lower-layer audio/video stream is replaced with the screen recording audio-video stream of the second terminal.

According to the embodiments shown in FIG. 13 and FIG. 14A to FIG. 14C, the second terminal may quickly share screen interface content (for example, a conference material, a photo, and a video) with the first terminal without a need to install video call application software. The first terminal may transmit the screen recording audio/video of the second terminal to another terminal for viewing. This step is simple, fast, and efficient, and communication efficiency and user communication experience are further improved.

With reference to the foregoing embodiments, the following describes an embodiment of screen sharing between a mobile phone A and a computer A. FIG. 15 shows a screen sharing process between a mobile phone A and a computer A described in this embodiment.

### Step ①: A video call application of the mobile phone A initiates a video call, and establishes a video call channel.

The video call application is not limited in this embodiment. The video call application may be a social application with a video chatting function, for example, WeChat, QQ, MeeTime, or DingTalk, or may be a video conference application, for example, ZOOM, welink, or cloudlink. In a video call process, the video call application may send received video data to a streaming media engine, and the streaming media engine performs processing and then displays the video data on a display. The streaming media engine may include an encoding function, a decoding function, an image rendering function, an image capturing function, a streaming media protocol, a quality of service (quality of service, QoS) technology, and the like.

### Step (2): The mobile phone A establishes a multi-screen collaboration connection to the computer A.

A multi-screen collaboration function is a distributed communication technology. The multi-screen collaboration function may implement collaborative work across operating systems or across devices. For example, after the mobile phone A establishes the multi-screen collaboration connection to the computer A, a function such as screen sharing, resource sharing, and a collaborative operation may be implemented between the mobile phone A and the computer A, to improve data processing efficiency. For example, in this embodiment, after the multi-screen collaboration connection is established, the computer A may share a screen picture of the computer A with the mobile phone A, and the mobile phone A may display the screen picture of the computer A.

### Step ③: A user selects a screen sharing media stream on the mobile phone A.

In some embodiments, the user may deliver a screen sharing start instruction on the mobile phone A. The user may further select the screen sharing media stream, that is, a video stream and/or an audio stream of the computer A. For example, the video stream may be an image stream captured by a camera of the computer A, or a screen recording video stream of the computer A, and the audio stream may be a sound collected by a microphone of the computer A, or audio corresponding to a media file played by the computer A.

After the user selects to start screen sharing, the mobile phone A and the computer A may negotiate an audio/video recording parameter. The parameter includes but is not limited to a screen recording, a bitrate of a sound recording module, a recording format, a cache path, a bitrate, a frame rate, a resolution of a screen recording, a source of a sound recording (audio corresponding to a media file or audio collected by a microphone), an audio/video encoding/decoding manner, a screen recording area, a specified recording file, a video window rotation policy (a direction of a recorded video is a vertical direction or a horizontal direction), a size of a video recording window, a policy of filling a black border for an area that does fills a screen, or the like. This is not limited in this embodiment.

### Step ④: The user selects, on the computer A, an audio/video stream that needs to be shared.

In some embodiments, the user selects a to-be-shared audio/video stream on the computer A. For example, the user may choose to share a recording video stream of a PC home screen, or may share a specified file, or may choose to combine, into a new audio-video stream for sharing, the picture captured by the camera of the computer A and the recording video stream of the home screen. Step (5): A codec of the computer A may perform encoding/decoding processing on the audio-video stream, and perform compression.

A media stream encoding and decoding manner is not limited in this embodiment.

### Step ⑥: The computer A sends the audio-video stream to the display transmission module.

### Step ⑦: The computer A transmits the recorded audio-video stream to the mobile phone A.

The computer A is a projection source end, and the mobile phone A is a projection receiving end. The computer A may send screen data of the computer A to the mobile phone A, and the mobile phone A may view a screen interface of the computer A on a screen.

### Step ⑧: After receiving the recorded audio and video of the computer A, the mobile phone A sends the virtual video stream to the video call application.

Specifically, the mobile phone A may enable received audio and video data of the computer A to separately use a camera channel and a microphone channel of the mobile phone A, and then transmit the audio and the video to the upper-layer video call application. As an upper-layer application, the video call application simply invokes a local microphone and a camera, and does not perceive a case in which a lower-layer audio-video stream has changed from an audio-video stream captured by the camera and the microphone of the mobile phone A to the screen recording audio-video stream from a computer A.

When the mobile phone A and the mobile phone B make a video call by using the video call application, the mobile phone A may transmit the received screen picture of the computer A to the mobile phone B by using the video call application through a connection. The audio-video stream transmitted by the mobile phone A to the video call application is media stream data from the local camera channel and the microphone channel. The mobile phone A enables a virtual audio-video stream from the computer A to occupy the local camera channel and the microphone channel. Therefore, a picture and a sound that are from the mobile phone A and that are viewed on the mobile phone B should be an image captured by the camera of the mobile phone A and a sound collected by the microphone, but the picture and the sound are replaced with the audio-video stream from the computer A.

In addition, the mobile phone A may further edit the received screen picture recorded by the computer A, to help the user change display effect of the screen picture on a side of the mobile phone A, for example, perform an operation such as scrawling and commenting on the screen picture. The user may alternatively select, on the side of the mobile phone A, a source of an audio stream to be transmitted to the mobile phone B. For example, the audio stream may be the sound collected by the microphone of the computer A, or the sound collected by the microphone of the mobile phone A, or audio corresponding to a media file on the computer A, or audio corresponding to a media file on the mobile phone A. For details, refer to the foregoing embodiments. Details are not described herein again.

According to the embodiment shown in FIG. 15, the computer A may quickly share screen interface content (for example, a conference material, a photo, and a video) with the mobile phone A without a need to install video call application software. The mobile phone A may transfer, to another terminal for viewing by using the video call application software, the audio and video recorded by the computer A. This step is simple, fast, and efficient, and communication efficiency and user communication experience are further improved.

Implementations described in the foregoing embodiments are merely example descriptions, and constitute no limitation on another embodiment of this application. A specific internal implementation may vary with different types of electronic devices, different used operating systems, different used programs, and different invoked interfaces. Embodiments of this application constitute no limitation, and a feature function described in embodiments of this application may be implemented.

As used in embodiments, depending on the context, the term "when" can be interpreted as "if ...", "after ...", "in response to determining that ...", or "in response to detecting that ...". Similarly, depending on the context, the phrase "when it is determined that ..." or "if it is detected that ... (a stated condition or event)" can be interpreted as "if it is determined that ...", "in response to determining that ... ", "when it is detected that ... (the stated condition or event)", or "in response to detecting that ... (the stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses.

The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device such as a server or a data center integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some procedures of the methods in embodiments may be implemented by a computer program instructing related hardware. The program may be stored in the computer-readable storage medium. When the program is executed, the procedures in the method embodiments may be performed. The storage medium includes any medium that can store program code such as a ROM, a random access memory RAM, a magnetic disk, or a compact disc.

The foregoing embodiments are merely used to describe the technical solutions of this application, but are not intended to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A screen sharing method, wherein the method comprises:
establishing, by a first terminal, a first connection to a second terminal;
obtaining, by the first terminal, a first media stream of the second terminal, wherein the first media stream comprises audio and a video generated by the second terminal, the audio comprises a sound collected by a microphone of the second terminal or audio corresponding to a media file played by the second terminal, and the video comprises a screen picture recorded by the second terminal;
generating, by the first terminal, a second media stream based on the first media stream, wherein the second media stream comprises the screen picture recorded by the second terminal;
sending, by the first terminal, the second media stream to a third terminal through a second connection;
playing, by the third terminal, the second media stream received from the first terminal; and
playing, by the first terminal, a third media stream received from the third terminal, wherein the third media stream comprises a picture captured by a camera of the third terminal or a sound collected by a microphone of the third terminal.

2. The method according to claim 1, wherein before the sending, by the first terminal, the second media stream to a third terminal through a second connection, the method further comprises:
establishing, by the first terminal, the second connection to the third terminal.

3. The method according to claim 1, wherein before the establishing, by a first terminal, a first connection to a second terminal, the method further comprises:
establishing, by the first terminal, the second connection to the third terminal;
playing, by the first terminal, the third media stream received from the third terminal, wherein the third media stream comprises the picture captured by the camera of the third terminal or the sound collected by the microphone of the third terminal; and
playing, by the third terminal, a fourth media stream received from the first terminal, wherein the fourth media stream comprises a picture captured by a camera of the first terminal or a sound collected by a microphone of the first terminal.

4. The method according to any one of claims 1 to 3, wherein before the obtaining, by the first terminal, a first media stream of the second terminal, the method further comprises:
detecting, by the first terminal, a first user operation, wherein the first user operation indicates the second terminal to start recording the screen picture.

5. The method according to any one of claims 1 to 4, wherein the second media stream is the same as the first media stream.

6. The method according to any one of claims 1 to 4, wherein the second media stream further comprises the picture captured by the camera of the first terminal.

7. The method according to any one of claims 1 to 4 and claim 6, wherein the second media stream further comprises an editing trace of the first terminal in the screen picture recorded by the second terminal.

8. The method according to claim 6 or 7, wherein the second media stream further comprises the sound collected by the microphone of the first terminal.

9. The method according to any one of claims 1 to 8, wherein the screen picture recorded by the second terminal comprises an entire screen picture recorded by the second terminal, a screen picture that corresponds to a partial area and that is recorded by the second terminal, or a screen picture that corresponds to a specified file and that is recorded by the second terminal.

10. The method according to any one of claims 1 to 9, wherein the sending, by the first terminal, the second media stream to a third terminal through a second connection specifically comprises:
transmitting, by the first terminal, a video stream comprised in the second media stream to an image stream channel of an image captured by the camera of the first terminal;
transmitting, by the first terminal, an audio stream comprised in the second media stream to an audio stream channel of the sound collected by the microphone of the first terminal; and
sending, by the first terminal, a media stream in the image stream channel and the audio stream channel to the third terminal through the second connection.

11. The method according to any one of claims 1 to 10, wherein after the establishing, by a first terminal, a first connection to a second terminal, the method further comprises:
negotiating, by the first terminal, a first parameter with the second terminal, wherein the first parameter comprises one or more of the following: a bitrate of a screen recording or a sound recording, a resolution of the screen recording, a sound source of the sound recording, a cache path, an audio or video encoding/decoding manner, a specified screen recording area, a specified recording file, and a video window rotation policy, and the sound source of the sound recording comprises audio corresponding to a played media file of the second terminal or audio collected by the microphone of the second terminal.

12. The method according to any one of claims 1 to 11, wherein a first user interface of the first terminal comprises a first window and a second window, and a second user interface of the third terminal comprises a third window and a fourth window; and
after the first terminal sends the second media stream to the third terminal through the second connection, a picture displayed in the first window is the picture captured by the camera of the third terminal, a picture displayed in the second window is the screen picture recorded by the second terminal, a picture displayed in the third window is the screen picture recorded by the second terminal, and a picture displayed in the fourth window is the picture captured by the camera of the third terminal.

13. The method according to any one of claims 1 to 11, wherein a first user interface of the first terminal comprises a first window and a second window, and a second user interface of the third terminal comprises a third window and a fourth window; and
after the first terminal sends the second media stream to the third terminal through the second connection, a picture displayed in the first window is the screen picture recorded by the second terminal, a picture displayed in the second window is the picture captured by the camera of the third terminal, a picture displayed in the third window is the screen picture recorded by the second terminal, and a picture displayed in the fourth window is the picture captured by the camera of the third terminal.

14. The method according to claim 12 or 13, wherein the first user interface of the first terminal further comprises a fifth window, and the second user interface of the third terminal further comprises a sixth window; and
a picture displayed in the fifth window is the picture captured by the camera of the first terminal, and a picture displayed in the sixth window is the picture captured by the camera of the first terminal.

15. The method according to any one of claims 12 to 14, wherein
when the first terminal plays the third media stream received from the third terminal, the picture displayed in the first window is the picture captured by the camera of the third terminal, and the picture displayed in the second window is the picture captured by the camera of the first terminal; and
when the third terminal plays the fourth media stream received from the first terminal, the picture displayed in the third window is the picture captured by the camera of the first terminal, and the picture displayed in the fourth window is the picture captured by the camera of the third terminal.

16. A screen sharing method, wherein the method comprises:
establishing, by a first terminal, a first connection to a second terminal;
obtaining, by the first terminal, a first media stream of the second terminal, wherein the first media stream comprises audio and a video generated by the second terminal, the audio comprises a sound collected by a microphone of the second terminal or audio corresponding to a media file played by the second terminal, and the video comprises a screen picture recorded by the second terminal;
generating, by the first terminal, a second media stream based on the first media stream, wherein the second media stream comprises the screen picture recorded by the second terminal;
sending, by the first terminal, the second media stream to a third terminal through a second connection, wherein the screen picture that is recorded by the second terminal and that is comprised in the second media stream is displayed on a screen of the third terminal; and
playing, by the first terminal, a third media stream received from the third terminal, wherein the third media stream comprises a picture captured by a camera of the third terminal or a sound collected by a microphone of the third terminal.

17. The method according to claim 16, wherein before the sending, by the first terminal, the second media stream to a third terminal through a second connection, the method further comprises:
establishing, by the first terminal, the second connection to the third terminal.

18. The method according to claim 16, wherein before the establishing, by a first terminal, a first connection to a second terminal, the method further comprises:
establishing, by the first terminal, the second connection to the third terminal;
sending, by the first terminal, a fourth media stream to the third terminal through the second connection, wherein the fourth media stream comprises a picture captured by a camera of the first terminal or a sound collected by a microphone of the first terminal, and the picture captured by the camera of the first terminal is displayed on the screen of the third terminal;
receiving, by the first terminal through the second connection, the third media stream sent by the third terminal; and
playing, by the first terminal, the third media stream received from the third terminal, wherein the third media stream comprises the picture captured by the camera of the third terminal or the sound collected by the microphone of the third terminal.

19. The method according to any one of claims 16 to 18, wherein before the obtaining, by the first terminal, a first media stream of the second terminal, the method further comprises:
detecting, by the first terminal, a first user operation, wherein the first user operation indicates the second terminal to start recording the screen picture.

20. The method according to any one of claims 16 to 19, wherein the second media stream is the same as the first media stream.

21. The method according to any one of claims 16 to 19, wherein the second media stream further comprises the picture captured by the camera of the first terminal.

22. The method according to any one of claims 16 to 19 and claim 21, wherein the second media stream further comprises an editing trace of the first terminal in the screen picture recorded by the second terminal.

23. The method according to claim 21 or 22, wherein the second media stream further comprises the sound collected by the microphone of the first terminal.

24. The method according to any one of claims 16 to 23, wherein the screen picture recorded by the second terminal comprises an entire screen picture recorded by the second terminal, a screen picture that corresponds to a partial area and that is recorded by the second terminal, or a screen picture that corresponds to a specified file and that is recorded by the second terminal.

25. The method according to any one of claims 16 to 24, wherein the sending, by the first terminal, the second media stream to a third terminal through a second connection specifically comprises:
transmitting, by the first terminal, a video stream comprised in the second media stream to an image stream channel of an image captured by the camera of the first terminal;
transmitting, by the first terminal, an audio stream comprised in the second media stream to an audio stream channel of the sound collected by the microphone of the first terminal; and
sending, by the first terminal, a media stream in the image stream channel and the audio stream channel to the third terminal through the second connection.

26. The method according to any one of claims 16 to 25, wherein after the establishing, by a first terminal, a first connection to a second terminal, the method further comprises:
negotiating, by the first terminal, a first parameter with the second terminal, wherein the first parameter comprises one or more of the following: a bitrate of a screen recording or a sound recording, a resolution of the screen recording, a sound source of the sound recording, a cache path, an audio or video encoding/decoding manner, a specified screen recording area, a specified recording file, and a video window rotation policy, and the sound source of the sound recording comprises audio corresponding to a played media file of the second terminal or audio collected by the microphone of the second terminal.

27. The method according to any one of claims 16 to 26, wherein a first user interface of the first terminal comprises a first window and a second window, and a second user interface of the third terminal comprises a third window and a fourth window; and
after the first terminal sends the second media stream to the third terminal through the second connection, a picture displayed in the first window is the picture captured by the camera of the third terminal, a picture displayed in the second window is the screen picture recorded by the second terminal, a picture displayed in the third window is the screen picture recorded by the second terminal, and a picture displayed in the fourth window is the picture captured by the camera of the third terminal.

28. The method according to any one of claims 16 to 26, wherein a first user interface of the first terminal comprises a first window and a second window, and a second user interface of the third terminal comprises a third window and a fourth window; and
after the first terminal sends the second media stream to the third terminal through the second connection, a picture displayed in the first window is the screen picture recorded by the second terminal, a picture displayed in the second window is the picture captured by the camera of the third terminal, a picture displayed in the third window is the screen picture recorded by the second terminal, and a picture displayed in the fourth window is the picture captured by the camera of the third terminal.

29. The method according to claim 27 or 28, wherein the first user interface of the first terminal further comprises a fifth window, and the second user interface of the third terminal further comprises a sixth window; and
a picture displayed in the fifth window is the picture captured by the camera of the first terminal, and a picture displayed in the sixth window is the picture captured by the camera of the first terminal.

30. The method according to any one of claims 27 to 29, wherein
after the first terminal sends the fourth media stream to the third terminal through the second connection, the picture displayed in the third window is the picture captured by the camera of the first terminal, and the picture displayed in the fourth window is the picture captured by the camera of the third terminal; and
after the first terminal receives, through the second connection, the third media stream sent by the third terminal, the picture displayed in the first window is the picture captured by the camera of the third terminal, and the picture displayed in the second window is the picture captured by the camera of the first terminal.

31. An electronic device, wherein the electronic device comprises a communication apparatus, a display, a memory, a processor coupled to the memory, a plurality of applications, and one or more programs, the display is configured to display a picture, the memory stores computer-executable instructions, and when the processor executes the instructions, the electronic device is enabled to implement the method according to any one of claims 16 to 30.

32. A communication system, wherein the communication system comprises a first terminal, a second terminal, and a third terminal, and the first terminal performs the method according to any one of claims 16 to 30.

33. A computer-readable storage medium, comprising instructions, wherein when the instructions are run on an electronic device, the electronic device is enabled to perform the method according to any one of claims 16 to 30.

34. A computer program product comprising instructions, wherein when the computer program product runs on an electronic device, the electronic device is enabled to perform the method according to any one of claims 16 to 30.
